# EUROPEAN PATENT SPECIFICATION

(11) **EP 3 288 903 B1**
(45) Date of publication and mention of the grant of the patent: **18.09.2019**
(21) Application number: 16728751.5
(22) Date of filing: 26.04.2016
(51) Int. Cl.: C02F 3/30

(54) **METHOD AND DEVICE FOR TREATMENT OF WASTEWATER USING ACTIVATED SLUDGE PROCESS WITH ENHANCED NITROGEN AND PHOSPHORUS REMOVAL**
VERFAHREN UND VORRICHTUNG ZUR ABWASSERBEHANDLUNG MIT AKTIVIERTEM SCHLAMMVERFAHREN MIT VERBESSERTER STICKSTOFF- UND PHOSPHORENTFERNUNG
PROCÉDÉ ET DISPOSITIF POUR LE TRAITEMENT DES EAUX USÉES PAR UN PROCÉDÉ À BOUES ACTIVÉES AVEC ÉLIMINATION AMÉLIORÉE DU PHOSPHORE ET DE L'AZOTE

(30) Priority: 28.04.2015 SK 500412015 U
(43) Date of publication of application: 07.03.2018
(73) Proprietor: Penzes, Ladislav, Bac 930 30 (SK); Csefalvay, Juraj, 900 44 Tomasov (SK); Aquatec VFL S. R. O., 018 41 Dubnica nad Váhom (SK)
(72) Inventor: PÉNZES, Ladislav, 930 30 Bá (SK); CSÉFALVAY, Juraj, 900 44 Tomá ov (SK)
(74) Representative: Litváková, Lenka
(86) International application number: PCT/SK2016/050005
(87) International publication number: WO 2016/175710

(56) References cited:
- US-A1- 2003 183 572
- US-A1- 2004 206 699

## Description

### Technical Field

The technical solution relates to a method of wastewater treatment with using activated sludge with enhanced nitrogen and phosphorus removal, in particular for individual and decentralized wastewater treatment systems.

### Background of the Invention

Individual or decentralized wastewater treatment is a method of disposal of sewage and municipal waste water from individual family houses or groups of family houses, hotels, restaurants, small factories, industrial parks, and other small sources in the place of their origin, which is applied in particular if it is not possible to be connected to the public sewerage with the central wastewater treatment plant for technical or economic reasons.

The aim of individual or decentralized wastewater treatment systems from hygienic and environmental point of view is satisfactory discharge of treated water into surface water or its soakage into soil or recycling and reuse of treated water having satisfactory quality at the point of waste water formation. Domestic and small wastewater treatment plants serving for individual or decentralized wastewater treatment are mainly focused on the treatment of organic pollution and possibly for ammonia nitrogen oxidation (nitrification). Increasingly comes to the fore the need to remove nitrogen and phosphorus from discharged waste water and also from the individual and small sources, as these have effect of the eutrophication on surface water (development of so-called water flower), especially in sensitive areas. Many countries have strict limits for discharge of wastewater containing nitrogen (N <10 mg/L) and phosphorus (P <1.0 mg/L) to surface water and groundwater either across the board or only in sensitive areas. Daily, weekly or seasonal variation of organic contamination at the inflow into the individual and small decentralized wastewater treatment systems has a significant influence on the efficiency of nitrogen and phosphorus removal because phosphorus accumulating and denitrifying microorganisms need for their function enough easily degradable organic substrate.

The process of nitrogen and phosphorus biological removal by activation process is one of the most widely used methods to nitrogen and phosphorus reduction in the process of sewage water and municipal wastewater treatment. In particular, when nitrogen is to be removed, it is necessary to focus on biological method of removal because other chemical or physicochemical methods have been shown to be highly uneconomical. The chemical removal of phosphorus is widespread, but an effort to reduce the consumption of chemicals exists, and therefore at least partial biological removal of phosphorus is preferred. For biological nitrogen and phosphorus removal it is necessary to create alternating anaerobic, anoxic, and oxic conditions for activated sludge in the bioreactor. Anaerobic, anoxic, and oxic conditions are often characterized by the oxidation-reduction potential (ORP), wherein value typical for anaerobic environment is -250 to -400 mV, for anoxic environment -50 mV to +50 mV and for oxic environment and +100 to +250 mV. Usually, they are one-sludge systems wherein the activated sludge comprises heterotrophic (denitrification and oxidation) and also autotrophic (nitrification) population of microorganisms. Part of the activated sludge is returned to the process as a recirculated sludge or it remains in the reaction volume and the part is removed as excess sludge with increased content of phosphorus, for further processing, storage or disposal. Recirculation and exhaust of sludge or treated water may be performed by mechanical pumps or pneumatically by means of air-lift pumps. The first method is more typical for municipal wastewater treatment plants with a higher capacity, utilization of air-lift pumps is typical for individual and small wastewater treatment plants. For aeration of oxic zone, fine-bubble aeration elements, that represent economically efficient manner of aeration, are the most commonly used. Mixing in the anaerobic and anoxic zones can be performed by means of mechanical stirrers (in particular for high-capacity central treatment plants) or intermittent stirring by compressed air or hydraulic agitation using recirculation of the mixed liquor (especially for individual and small treatment plants).

Over the recent decades various modifications of the activation process with increased biological removal of nitrogen and phosphorus achieving a desired strict limits for nitrogen and phosphorus were developed. Specific requirements are raised for individual and decentralized treatment of wastewater from small sources while maintaining high efficiency of nitrogen and phosphorus removal:
- to maintain a high efficiency of nitrogen and phosphorus removal even when the production of wastewater from small sources of pollution is highly fluctuating during the day and during the year,
- flexibility of recirculation and aeration adaptation to changes in the quantity, quality of wastewater and other factors affecting the efficiency of the treatment process, the possibility of remote monitoring and control,
- low demands on operation,
- low energy demands.

All of the above expectations are associated with method of control of mixed liquor aeration and recirculation processes, because these processes have the greatest influence on the final efficiency of nitrogen and phosphorus removal as well as energy consumption. It is also important for the method of aeration and recirculation control to have minimum demands on experience and expertise of operation and service, especially in case of the smallest decentralized systems - house and small wastewater treatment plants.

The configuration of the bioreactors in which activation process takes place, can be divided into:
- reactors or zones completely agitated,
- reactors or zones with a gradual (piston) flow,
- cascading reactors or zones which consist of several smaller completely mixed reactors (selectors) connected in series,
wherein each of the reactor configurations can positively or negatively influence the processes of nitrogen and phosphorus biodegradation.

In terms of operation and formation of alternating anaerobic, anoxic and oxic conditions for the activated sludge we can divide existing modified activation systems into:
- systems with continuous inflow and outflow of wastewater with spatially separated anaerobic, anoxic, and oxic zones and spatially separated final settlement area for separation of activated sludge from treated water within the biological reactor and recirculation of the mixed liquor between the individual zones and areas,
- systems with discontinuous inflow and outflow with a time separation of anaerobic, anoxic, and oxic separation phases in the bioreactor without spatially separated final settlement zone ("SBS" systems - Sequencing Batch Reactor), which do not require recirculation of the mixed liquor,
- mixed, combined and hybrid systems that use some elements of the previous two systems in various combinations to eliminate the disadvantages of purely continuous or purely discontinuous systems.

The common feature of continuous systems is a continuous inflow into and outflow from the biological reactor/reactors, approximately constant water level in all zones of the process and spatially defined sedimentation tank or zone for separation of activated sludge from treated water. For biological removal of nitrogen, in addition to the oxic zone, the spatially delimited anoxic zones are included in the process of purification by the activated sludge, anoxic zones are usually anoxic prezones (e.g. Ludzack-Ettinger process) with one internal anoxic recycle from the oxic zone to the anoxic zone or from the final settlement zone to the anoxic zone (so-called "recycle NOx"). If phosphorus biodegradation is necessary, an anaerobic zone (e.g. "UCT Process") with internal recycle of the mixed liquor from the anoxic zone to the anaerobic zone (internal recycle of mixed liquor, so called "MLSS internal recycle" - Mixed Liquor Suspended Solids) is added. The settled activated sludge from the final settlement zone is returned to the purification process by recirculation of return sludge ("return sludge recycle").

Recirculation has a great influence on efficiency of nitrogen removal because the larger the recirculation ratio between the "NOx recycle" and wastewater average daily discharge Q_{d}, the larger the efficiency of nitrogen removal. However, too high value of "NOₓ recycle" is associated not only with increased power consumption for pumping, but also with equalizing of concentration gradient, which is necessary for suppression of filamentous organisms, further with introduction of nitrates and dissolved oxygen in the anaerobic zone and the anoxic zone, thus reducing the efficiency of nitrogen and phosphorus degradation. As an economic limit for "NOₓ recycle", value equal to 4x Qp, i.e. ratio of 4:1, has been reported. A typical "NOₓ recycle" is 2:1 to 4:1, and "MLSS internal recycle" 1:1 to 3:1. For individual and small wastewater treatment plants, into which the whole daily amount of wastewater flows for 10 to 12 hours, is more useful to count the recirculation rate using the maximum hourly discharge Q_{max,h}. Another key feature is hydraulic retention time in individual zones of the activation process that links volume of individual delimited zones with average daily discharge Q_{d}, taking into account kinetics of biological processes. Typical retention times in the UCT process are 1-2 hours in the anaerobic zone, 2-4 hours in the anoxic zone, and 4-12 hours in the oxic zone, i.e. the approximate volumetric ratio of the anaerobic zone to the anoxic zone and to the oxic zone is 1:2:4 to 1:2:6. Typical volumetric ratios of individual zones for the other continuous modified activation systems are in the range of 1:2:4 to 1:2:8.

The efficiency and stability of nitrogen and phosphorus removal from wastewater is highly influenced by the content of easily degradable organic substances in wastewater, the main component of which are lower fatty acids - "VFA" (Volatile Fatty Acids), which originate mainly by fermentation of organic ingredients of raw wastewater due to fermentation microorganisms. Lower fatty acids are suitable substrate also for denitrifying organisms and improve the efficiency of nitrogen removal. In case of their deficiency, the efficiency of biological phosphorous removal is reduced. According to the prior art, one possibility for enhancing the efficiency of the biological removal of phosphorus is to add VFA in the form of external substrate to the anaerobic zone of the bioreactor or to produce VFA in situ in the side technological stream out of main line of biological treatment, e.g. in sludge management facility (the primary sludge thickening tank) and thereby enrich the inflow into the bioreactor by produced VFA. In the process of "Phostrip", anaerobic conditions are made by sufficiently long hydraulic retention time of the return sludge in the gravity thickening tank HRT = 8-12 h (HRT - Hydraulic Retention Time), during which the return activated sludge is fermented, wherein the VFA are produced, the VFA are using phosphorus accumulating organisms "PAO" (Phosphorus Accumulating Organisms). Sludge from the bottom of gravity thickening tank is fed to the inlet to the anoxic and oxic zone where PAO accumulate phosphorus under anoxic and oxic conditions. Extraction of released phosphorus is supported by recirculation of sludge from the bottom towards the inlet of the gravity thickening tank. The disadvantage of this process is that when retention time is long (4-6 days), so-called secondary release of phosphorus occurs, which is not related to the accumulation of intracellular storage substances PHA (poly-β-hydroxyalkanoate) that are necessary for the phosphorous accumulating organisms PAO and this released phosphorus needs to be chemically precipitated. Further disadvantage is that the process Phostrip requires additional tank outside the bioreactor. According to the prior art, VFA production in situ, directly in the biological reactor, in the anaerobic zone, is undesirable because the extension of the hydraulic retention time HRT> 3 hours in an anaerobic fermentation zone for the purpose of fermentation of organic substances and the activated sludge results in the already mentioned secondary release of phosphorus. Regarding the sludge retention time, SRT about 1 day it is recommended. When hydraulic retention time in the anaerobic phase is extended, without bringing the sludge into suspension and mixing it with the mixed liquor, it is necessary, at least on the short-term basis, to solve the potential problem of odor in the case that the decomposition of organic substances and activated sludge pass into deep anaerobic phase, characterized by ORP -450 mV or less, when hydrogen sulfide and other malodorous gases are formed. Efforts have been made to introduce VFA production in situ in the bioreactor, as for example in WO2005/028373A2, but achieved average output concentration of phosphorus was only 3 mg/L P, which is probably caused by secondary release of phosphorus because of said configuration of the bioreactor and process control, which relies on diffusion processes and on suction effect of higher located pumps when circulation between anaerobic zone, anoxic zone and oxic zone, is introduced, wherein the sludge area is not bring into suspension and is not part of the activation process. A similar process of mixing is also disclosed in solution according to US2010/0101995A1.

The kinetic principles of microbiological processes determine the speed of denitrification and of other processes associated with substrate utilization. It is well known that the speed of the substrate utilization is increased when the substrate concentration in the reactor at a given concentration of biomass is increased. Below a certain critical value of the concentration of substrate, the value of substrate utilization speed is reducing almost linearly. A similar dependency applies to the assimilation of other substrates, for example an electron acceptor substrate (oxygen, nitrate nitrogen), which means that in addition to the concentration of substrate for assimilation - readily degradable organic substances, the speed of assimilation processes of readily available substrate in the absence of oxygen and in the presence of nitrate nitrogen (denitrification in the anoxic zone) or assimilation in the presence of oxygen (nitrification and oxidation in the oxic zone) is also affected by concentration of electron-acceptor substrate - nitrate nitrogen in the anoxic zone or oxygen in the oxic zone. Therefore, there are efforts to maintain the system at high operating speed of biochemical reactions for increasing the efficiency of nitrogen removal by automatic control of length of ON-OFF periods of aerating the mixed liquor, e.g. in CS9101653 A3, but control of recirculation and mixing of the mixed liquor has been not solved.

By continuous modified to activation processes with the biological removal of nitrogen and phosphorus the concentration of total nitrogen Ntotal> 10 mg/L and total phosphorus Ptot> 1 mg /L can be achieved, but they require control of mixed liquor aeration and recirculation processes to remove nitrogen and phosphorus and have increased demands on automation technology along with an on-line measuring devices and analyzers of various parameters characterizing the oxidation-reduction ratio, oxygen concentration and nitrogen and phosphorus forms, etc., together with the necessary experience and expertise in operation and control that can be economically provided only for centralized medium size and large municipal wastewater treatment plants.

Management of activation process is mainly the management of ON-OFF control of aeration or intensity of aeration and control of intensity of recirculation, in jumps or smoothly. Aeration control is based on various ON or OFF time modes of the air blowers at different time intervals, switching between lower and higher revolution frequency of aeration devices or continuous change in aeration intensity by means of frequency converters for air blowers or by regulation of positionable valves on the compressed air branches. When air blowers are shut down for a longer period of time, it is necessary to ensure the maintenance of the activated sludge in suspension by switching on mechanical stirrers or by occasional switching on the air blower for a short time. ON - OFF control for air blowers or control of reducing - increasing the revolution frequency of air blower engines is performed either on basis of simple firm time modes according to expected daily course of load of inflow of the bioreactor (typically in individual and small systems) that are built into the timer or on basis of measurement of the parameters characterizing the concentration of dissolved oxygen, nitrogen and phosphorus forms, oxidation-reduction potential, and the like (typically in larger central wastewater treatment plants) and on-line evaluation of measured quantities by means of control algorithms according to different control strategies that are based on the kinetics of the oxidation processes of nitrogen forms, changes in redox conditions in the mixed liquor and the like, where the length of the ON-OFF periods of aeration depends on the measured quantities and target values of measured quantities. Based on the measured signals and their evaluation, the control unit controls positionable valves on the air branches to the aeration elements or controls the revolution frequency converter of the air blower.

The intensity of recirculation can be regulated in jumps by switching on or off multiple recirculation pumps connected in parallel, by increasing revolution frequency of recirculation devices in jumps or by continuous regulation of revolution frequency of air blowers or recirculation devices on basis of measurement of the values characterizing the flow of wastewater and the flow of recirculated streams, measurement of the concentration of suspended solids in the recirculated streams, concentration of organic pollution of inflow, measurement of oxidation-reduction potential ORP, nitrate concentrations (e.g. US6254778B1) and online evaluation of measured quantities using control algorithms according to different management strategies.

In larger central wastewater treatment plants, mixing the mixed liquor in the anaerobic and the anoxic zone is continuous or long periods of continuous operation are prevailing, being interrupted by short periods of standing, which has mainly economic reasons - saving electricity. In domestic and small wastewater treatment plants, mixing in the anaerobic and the anoxic zone is provided by means of coarse-bubble aeration or short fine-bubble aeration, or mixing is provided hydraulically, by means of recirculation of the mixed liquor. In these small plants, the mixing is, in principle, disrupted, often is performed in parallel with recirculation of the mixed liquor.

Patent US2003/0183572 A1 discloses a method and apparatus for continuous wastewater treatment by activation process with nitrogen and phosphorus removal. Further improvements to this process for equalization of variable flow rates by means of the flow controller and the integral retention zone are disclosed in WO2007022899A1, the aim of which was to use a continuous modified activation process of individual and decentralized solutions and reduce demands for experience and expertise in operation and controlling.

A process of purification of wastewater according to US2003/0183572 A1 and WO2007022899A1 includes an activated chamber with an unaerated anaerobic-fermentation zone, a denitrification zone and an aerated nitrification zone and a final settlement zone in one bioreactor where the anaerobic-fermentation zone and the denitrification zone of the activated chamber are separated by over and under baffles in the direction of continuous flow while forming a vertical flow labyrinth, with recirculation from the denitrification zone to the anaerobic-fermentation zone and recirculation of return sludge from the final settlement zone to the denitrification zone. Recirculation of the mixed liquor in the anaerobic-fermentation and the anoxic zone also provides for mixing the mixed liquor. The retention time and the concentration of activated sludge in an anaerobic-fermentation zone, the denitrification zone, the nitrification zone and the final settlement zone are controlled by changing the intensity of recirculation of the mixed liquor into the anaerobic-fermentation zone and return sludge into the denitrification zone or alternating the continuous operation and short-time intermittent recirculation operation in the fixed intervals that correspond to daily fluctuations in load of inflow into the bioreactor. The air blower delivers pressurized air to the aeration elements, which are used for mixing and aeration of the nitrification (oxic) zone and for recirculation of the mixed liquor using air-lift pumps, which are driven by compressed air from the air blower. Operation of the air blower is controlled by the control unit, which comprises a preset intervals of intermittent and continuous operation during the day, i.e. intervals of intermittent operation and continuous operation are alternating, wherein their alternation is adapted to the daily production of wastewater from an individual source. The recirculation and the aeration of the mixed liquor takes place simultaneously, wherein during the continuous operation of the air blower, mixing of the anaerobic-fermentation, the anoxic and the oxic zone occurs and the sludge concentration in individual zones is equalized.

Device for air distribution according to US2003/0183572 A1 consists of an air blower and an air distributor with manual valves which are used to adjust the distribution of air in the individual elements - air-lift pumps and the aeration element through air distribution piping to equalize the effects of different pressure losses in the individual elements and set proper intensity of recirculation and aeration. Device for air control in the individual elements via manual valves requires expertise and experience in setting air distribution to individual elements. The correct setting has significant impact on the treatment efficiency, functionality of wastewater treatment plant. Inexperienced or accidental resetting of manual valves can prevent the function of the individual elements, and thereby reduce the treatment efficiency. Another major disadvantage is that the manual valves cannot be reset remotely, if necessary, but only manually on site, or the only option is to reset remotely air blower operation mode. The air blower must have sufficient capacity to enable simultaneous air supply to the air-lift pumps and for aeration. Higher capacity of the air blower means higher investment costs and higher electric energy consumption. Table no. 1 shows the results of long-term testing of the efficiency of domestic wastewater treatment plant based on a methods of wastewater treatment according to patent US2003/0183572 A1. This table shows that the device did not achieve the required Ntotal concentration below 10 mg/L and the average concentration of total phosphorus Ptotal was above 3 mg/L and efficiency of nitrogen removal was about 60 % and efficiency of phosphorus removal was only about 50 %. Energy demands were 0.28 kWh / EO,d (EO - number of connected population equivalents).

**Table 1**

| Parameters | BSK5 | | Ntotal+ | | Ptotal | |
|---|---|---|---|---|---|---|
| | Concentration mg/L | Treatment efficiency % | Concentration mg/L | Treatment efficiency % | Concentration mg/L | Treatment efficiency % |
| Raw wastewater | 250 | - | 39,2 | - | 7,0 | - |
| Treated wastewater | 7,0 | 97,2 | 15,0 | 61,7 | 3,7 | 47,4 |

| | | | | | | |
|---|---|---|---|---|---|---|
| + for temperatures of mixed liquor ≥12°C | | | | | | |

In the discontinuous wastewater treatment systems (SBR process and modified versions of the SBR process as CASS™, ICEAS™), the individual processes run also cyclically, as anaerobic, anoxic and oxic culture conditions for activated sludge are achieved by cyclic switching of air blowers and stirrers ON and OFF or hydraulic mixing using inflow of raw wastewater (ICEAS™ process) is used. For these systems is characteristic that they do not need recirculation of activated sludge (conventional SBR systems), only the extraction of the excess sludge and treated water or need only low recirculation rate (a reactor CAAS™ or a reactor according to patent WO98/30504), because aeration and separation of the activated sludge is carried out in the same reactor volume. In SBR systems, the nitrogen and phosphorous reduction is achieved by inserting a mixing phase during inflow of wastewater without aeration and/or by cyclic aeration ON/OFF during the aeration phase.

Typical phases of SBR process are following:
- Phase 1 - "inflow" - often by means of the air-lift pump, during the idle phase, it lasts about 90 minutes,
- Phase 1a - "anaerobic phase" - during the idle phase, along with the inflow of the raw wastewater containing easily decomposable organic substances, it may be combined with occasional stirring using a short-term or coarse bubble aeration or a mechanical stirrer,
- Phase 2 - "aeration" - length of cycle 180 minutes, aeration may be intermittent, e.g. 4 minutes ON and 6 minutes OFF, length of cycles 10 minutes,
- Phase 3 - "anoxic phase" - it can be linked with occasional stirring using a short-term or coarse bubble aeration or a mechanical stirrer, it lasts about 60 minutes,
- Phase 4 - "sedimentation phase"- it lasts at least 90 minutes,
- Phase 4a - "extraction of treated wastewater" - using air-lift pump during sedimentation phase,
- Phase 4b - "extraction of excess sludge" - 30-40 cm is pumped from the bottom using the air-lift pump during the sedimentation phase.

The typical number of cycles is 6 cycles per day.

### Summary of Invention

The technological solution presented according to the present invention is defined the claims and in particular in the independent claim 1 for the method and in the independent claim 5 for the device. The invention results in significantly improved efficiency of nitrogen and phosphorus removal, in conditions with significantly fluctuating hydraulic and organic matter load during day, week and season, while the energetic and operational demands are significantly reduced through improved method of wastewater treatment in comparison with US2003/0183572 A1, using processes occurring in an anaerobic zone, an anoxic zone, an oxic zone and a final settlement zone with controlling aeration, recirculation and mixing of a mixed liquor suspended solids (MLSS) through intermittent operation. During long-term testing, we observed that the key factor increasing the biological removal of nitrogen and phosphorus is intermittent aeration, recirculation and mixing of the MLSS so that short aeration periods alternate with short periods of recirculation and mixing. Following this observation, development of a new method of controlling aeration, recirculation and mixing of the MLSS was started and we observed increased effectiveness of the treatment process, if the short aeration pulse periods and short recirculation and mixing periods were asynchronous, wherein one aeration period and one recirculation and mixing period represented single cycle that was repeated over 80 to 320 times per day, with preferable range approximately 160-310 times per day.

Based on experience from testing of intermittent aeration, recirculation and mixing, the optimum duration of aeration period and recirculation and mixing period was determined according to this solution, which is included in this technological solution: duration of the aeration period ranging from 0.5 to 7 minutes, preferably ranging from 3 to 5 minutes, and duration of the recirculation and mixing period ranging from 0.5 to 14 minutes, preferably ranging from 1 to 5 minutes.

Duration of the periods can be accommodated to specific type and capacity of air blowers, recirculation and mixing units, wherein when selecting duration of aeration, recirculation and mixing periods is important to take into consideration that during the short period with no recirculation and mixing in the anaerobic zone and the anoxic zone, or with no aeration and mixing in the oxic zone, activated sludge floc particles should never settle completely - so that the activated sludge remains, partially, in suspension, in the oxic zone as well as in both anaerobic and anoxic zones, and that during the recirculation and mixing periods in the anaerobic and anoxic zones, concentration gradient between the concentrations of MLSS at the bottom and at the surface is not significantly disturbed, which can be achieved by alternating short periods of recirculation and mixing of the MLSS in the anaerobic zone and the anoxic zone with periods of aeration and mixing of the MLSS in the oxic zone, wherein during the periods of recirculation and mixing of the MLSS in the anaerobic zone and anoxic zones, no aeration and mixing of the MLSS is taking place in the oxic zone and during the periods of aeration and mixing of the MLSS in the oxic zone, no recirculation and mixing of the MLSS is taking place in the anaerobic zone and the anoxic zone.

Kinetics of the denitrification processes in the anoxic zone in excess of easily degradable volatile fatty acids (VFA) substrate is sufficiently fast due to increased metabolic activity of the biomass and rapid enzymatic reactions in the MLSS that is delivered in pulses from the oxic zone to the anoxic zone. Rapid progress of denitrification within several minutes is supported both by excess of easily degradable VFA substrate and by short-term pulsed increased concentration of electron-acceptor substrate - nitrate form of nitrogen from NOx recycle. In situ formation of excessive degradable VFA substrate in bioreactor is supported by stratification of sludge blanket when the short duration of recirculation and mixing period does not disturb the significantly higher density of the sludge blanket at the bottom of the anaerobic zone with low value of oxidation-reduction potential, thereby creating optimum conditions for accumulation of intracellular storage compounds in phosphorus-accumulating bacteria; the process lasts only a few minutes. Amplitude of pulsed dosage of recirculating liquor during the day is determined by the maximum usable capacity of recirculation units, whereas the minimum value of amplitude can be zero or a specific minimum value, e.g. in the interval from 5 to 49 % of the value of amplitude. Amplitude of short aeration periods is determined by the maximum usable capacity of air blower(s), while the reduced value of amplitude can be equal to zero or a specific reduced value, e.g. 5 to 49 % of the aeration amplitude.

Pulsed dosing of the recirculating liquor during recirculation can be based on switching off-on the recirculation unit or continuously changing revolution frequency of the recirculation unit's electric motor using a frequency converter, an engine soft starter or other device with the similar purpose. Short-term activation of the mixing unit in the anaerobic zone and the anoxic zone during recirculation and mixing period may be based on switching on-off the mixing unit or continuously changing revolution frequency of the mixing unit's electric motor using a frequency converter, an engine soft starter or other device with the similar purpose. Short-term switching on-off of the air blower may be performed directly by switching on-off the air blower or by continuously changing revolution frequency of the air blower's electric motor using a frequency converter, engine soft starter or other device with the similar purpose.

Mixing in the anaerobic zone and anoxic zone using recirculation of the MLSS and arrangement of a series of over and under baffles forming a vertical flow labyrinth in the anaerobic zone and the anoxic zone with plug (piston) flow is preferred, as this leads to natural stratification of sludge blanket and formation of concentration gradient between the concentrations of MLSS at the bottom and at the surface of the bioreactor in the anaerobic zone and anoxic zone and supports effective wash-out of produced easily degradable organic VFA substances from the sludge blanket through the vertical flow of the MLSS from the bottom towards the surface through the stratified layers of sludge blanket.

Preferably, adaptation to changes of bioreactor's loading parameters through changing the amount and quality of influent wastewater or changes in other parameters (MLSS temperature, inhibiting effects of influent wastewater components, etc.) that influence effectiveness and efficiency of the biological treatment process can also be achieved by simple switching between daily cycle schedules with pre-determined duration of aeration period and recirculation and mixing period or duration of idle period per cycle, wherein such switching between daily cycle schedules can be performed manually based on assumed higher or lower load (e.g. in temporarily increased wastewater production caused by visitors or reduced wastewater production during holiday in case of domestic wastewater treatment plants) or automatically based on measured parameters (ORP, concentrations of oxygen, nitrogen compounds, phosphorus) in larger central wastewater treatment plants, whereas these changes can also be performed by remote control. Respective time schedules differ in their total recirculation and aeration time per day, i.e. recirculation ratio, and duration of oxic phase.

In the preferred solution, adaptation to changes in the bioreactor's loading parameters (changes in amount and quality of influent wastewater) or changes in other parameters (MLSS temperature, inhibiting effects of components of influent wastewater, and other) that influence effectiveness and efficiency of biological treatment process can also be achieved by fluctuating duration of period of aeration and period of recirculation and mixing, or idle period per cycle, and using an integral algorithm, set according to selected control strategy of achieving target nitrogen and phosphorus concentrations in treated wastewater based on measured values of the MLSS (ORP, concentrations of oxygen, concentrations of nitrogen compounds, concentrations of phosphorus), wherein measurement and evaluation of the measured parameters is performed on-line and directly influences the actual duration of the periods of recirculation and mixing and of the aeration periods within determined intervals of recirculation and mixing periods and aeration periods, or idle periods, wherein the chosen control strategy can also be controlled remotely.

Configuration of the bioreactor, the section of which, with the anaerobic zone and anoxic zone, has predominantly vertical and piston flow, is critical for implementation of the new method of controlling aeration, recirculation and mixing of the MLSS, in order to reduce to minimum disturbances to stratification of the sludge blanket from recirculation of MLSS and influent wastewater, to achieve effective wash-out of the produced easily achievable substrate in form of short-chain fatty acids, and to prevent secondary release of phosphorus. Sufficient duration of hydraulic retention time in the anaerobic zone and anoxic zone is a significant parameter for in situ production of VFAs excess in the bioreactor in a stratified sludge layer and for complete denitrification, which can be expressed by the condition of volumetric ratio of spatially separated anaerobic zone, anoxic zone and oxic zone between 1:1:1 and 1:2:4, preferably between 1:1:1.5 and 1:1:2 and/or minimum hydraulic retention time in the anaerobic zone between 7 and 15 hours, preferably between 9 and 13 hours.

Essentially, secondary release of phosphorus will not occur due to rapidly repeating cycling processes of recirculation and mixing, during which settled floc particles of activated sludge are resuspended and microorganisms become part of the recirculated MLSS and are repeatedly exposed to quick sequence of anaerobic, anoxic and oxic conditions with cycle counts ranging from 80 to 320, preferably 160-310 cycles per day.

It is important for the formation of stratified sludge layer and in situ production of VFA excess in the bioreactor, contrary to the solution of US2003/0183572 A1 and the present state of art, that according to the present technological solution long-term phases of continuous aeration, recirculation and mixing of MLSS and aeration are not included in daily time schedule or controlling algorithm, recirculation and mixing run asynchronously or there is the idle period before the recirculation period and the mixing period when no aeration, recirculation or mixing takes place. The new solution of controlling aeration, recirculation and mixing of MLSS prevents parallel recirculation and aeration of the MLSS, which significantly reduces input of dissolved oxygen in the stream of NOx recycle from the oxic zone to the anoxic zone when in absence of aeration, the concentration of dissolved oxygen in the oxic zone rapidly drops due to assimilation, i.e. use of available dissolved oxygen as electron-acceptor substrate. This process is further enhanced in case that it includes the idle period after the period of aeration or before period of recirculation and mixing. Support of fermentation in the stratified layer of sludge blanket in the anaerobic zone and of formation of VFAs excess in situ accelerates the denitrification process dynamics of which depends on access to sufficient amount of easily degradable substrate and access to sufficient amount of electron-acceptor substrate, which, in denitrification, means oxidized nitrogen compounds from NOx recycle. Support of fermentation in return supports the anaerobic environment at the bottom of the anaerobic zone, because internal recycling of MLSS does not move the oxidized nitrogen compounds from the anoxic zone to the anaerobic zone, The oxidized nitrogen compounds disturb phosphorus-accumulating bacteria (PAO) and fermenting bacteria which are only effective at sufficiently low ORP value and in absence of oxidized nitrogen compounds. Long-term testing of effectiveness has shown that the effectiveness of nitrogen and phosphorus removal is not reduced even under overload and low load of treatment plant during simulated periods of low and high load and periods without inflow of wastewater, which indicated the optimum duration setting of aeration, recirculation and mixing periods and for sufficient formation of easily available short-chain fatty acid substrate. Sufficient reserves of organic substances at the bottom of the stratified sludge blanket layer, originating from influent wastewater from the periods of normal or increased load as well as from decay of activated sludge produced in excess during periods of normal or increased load have buffering effect preventing reduced effectiveness of phosphorus removal due to fluctuations in amount and quality of wastewater, because they guarantee sufficient production of VFA even at temporarily reduced load or in periods without wastewater supply.

An advantage of individual and small wastewater treatment plants with controlled aeration and MLSS recirculation using pressure air and air-lift pumps according to this solution is that it requires no manual setting of recirculation intensity separately for each recirculation air-lift pump and aeration element using manual valves and balancing of various pressure losses of pressure air between the air-lift pumps and aeration element because the pressure air is directed either into the aeration element circuit or into the circuit of recirculation air-lift pumps. If it is necessary to adapt recirculation or aeration to changes in quality and amount of wastewater (long-term visitors, holidays, etc.), it can be simply switched to different time schedule without necessary re-setting of manual valves and this change can also be performed remotely, if the treatment plant is equipped with an appropriate communication module, e.g. GSM module. Short aeration and recirculation periods of several minutes allow for flexible changes, preferably approximately 160 to 300 cycles per day, contrary to the present state of art with cycles lasting several hours, e.g. 4-hour cycle, i.e. 6 cycles per day.

Non-synchronous processes of aeration and recirculation of the MLSS using the pressure air from blower allow for energy savings for operating the air blower and use of air blower with lower capacity to produce the pressure air in Nm3/h even in continuous systems with the activated sludge, which reduces investment and operating costs.

Non-synchronous processes of aeration and recirculation of the MLSS using the pressure air from the air blower also improve effectiveness of nitrogen and phosphorus removal because the period of aeration does not correspond to duration of recirculation period, which can optimize recirculation ratio of recirculation pumps for NOx recirculation from the oxic zone to the anoxic zone and internal recirculation of MLSS between the anoxic zone and the anaerobic zone regardless of the need for sufficiently long aeration period inside the oxic zone for 6-21 hours per day, which is impossible with parallel processes of aeration and recirculation of the MLSS due to the pressure air from the air blower.

Preferably, the idle period is inserted before the recirculation period, with the air blower being switched off, aeration being switched OFF and recirculation being switched OFF, which can further improve effectiveness of sludge blanket stratification in the anaerobic zone and the anoxic zone, reduce oxygen concentration in returning sludge and in NOx recycle and reduce electricity consumption. Duration of the idle period can range within 0.5-15 minutes, preferably 2-6 minutes.

For individual wastewater treatment systems, it is preferable to divide the pressure air alternately to an aeration pipe and a recirculation pipe using a single three-way electromagnetic valve with one outlet port connected to the aeration air pipe and the other outlet port connected to the air pipe of MLSS recirculation.

Devices for alternative redirection of the pressure air between the aeration and recirculation pipes may include various electric, electromagnetic, hydraulic valves and actuators and their numbers can vary depending on size of the wastewater treatment plant and number of parallel treatment technology lines. The recirculation unit can also be represented by one or more pumps of different types (especially in large wastewater treatment plants) and alternating between periods of aeration and recirculation can be performed through switching on-off the air blowers and the recirculation units or through decreasing and increasing revolution frequency of electric motors which drive the air blowers for supply of pressure air and the pumps for recirculation of the MLSS. Comparison of technological parameters of method of recirculation and aeration control according to prior art and according to presented technical solution is in Tables nos. 2, 3, and 4 for the continuous and discontinuous activation systems:

**Table no. 2: Recirculation and aeration control - comparison of prior art with presented technical solution.**

| | Prior art | Presented technical solution |
|---|---|---|
| 1. Type of activation system | Continuous with recirculation of mixed liquor | Continuous or discontinuous-hybrid, cyclic with recirculation of mixed liquor |
| 2. Method of recirculation | Continuous, parallel with aeration (medium size and large WTPs). | Pulse intermitted, alternately (asynchronously) with aeration. |
| | Continuous and intermitted, parallel with aeration (domestic and small WTPs). | |
| 3. Method of aeration | Continuous and/or intermitted, parallel with recirculation | Pulse intermitted, alternately (asynchronously) with recirculation. |
| 4. Method of recirculation and aeration control | | |
| 4.1 Control by timer | Firmly set phases of continuous and intermitted operation, recirculation parallel with aeration (domestic and small WTPs). | Firmly set short periods of recirculation alternately (asynchronously) with short periods of aeration |
| 4.1.1 Controlled device | Air blower (domestic and small WTPs). | Electromagnetic or other valve(s) on air piping (domestic, small and medium size WTPs) Recirculating device (pump(s) and air blower(s) (large WTPs) in jumps or fluently via frequency converter and similar device |
| 4.1.2 Duration of recirculation period ON | >15 min (domestic and small WTPs) | 0.5-14 minutes |
| 4.1.3 Duration of recirculation period OFF | >15 min (domestic and small WTPs) | 0.5-7 minutes |
| 4.1.4 Duration of aeration period ON | >10 min | 0.5-7 minutes |
| 4.1.5 Duration of aeration period OFF | >10 min | 0.5-14 minutes |
| 4.1.6 Number of recirculation cycles ON-OFF per day | <48 (domestic and small WTPs) | >80 |
| 4.2 Control of measured quantities | On-line measurement of concentration of oxygen and/or nitrogen forms, oxidation-reduction potential or other quantities, automatic increase or decrease of intensity of aeration and/or recirculation according to set critical values of measured quantities | On-line measurement of concentration of oxygen and/or nitrogen forms, oxidation-reduction potential or other quantities, automatic increase or decrease of recirculation period duration and aeration period according to set critical values of measured quantities, in interval of short period of recirculation and aeration |
| 4.2.1 Controlled device | Recirculation: Recirculating device (pump(s) | Recirculation and aeration: Electromagnetic or other valve(s) on air piping (domestic, small and medium size WTPs) |
| | Aeration: Air blower(s) | Recirculation: Recirculating device (pump(s)) (large WTPs) Aeration: Air blower(s) large WTPs) |
| 4.2.2 Duration of recirculation period ON | Depending on the measured quantities, continuous increase or decrease of recirculation intensity | Depending on the measured quantities, in the interval of min. 0.5 minute and max. 14 minutes |
| 4.2.2 Duration of recirculation period OFF | - | Depending on the measured quantities, in the interval of min. 0.5 minute, max. 7 minutes |
| 4.2.3 Duration of aeration period ON | Depending on the measured quantities, in the interval of min. 10 minutes, max. 90-300 minutes | Depending on the measured quantities, in the interval of min. 0.5 minute, max. 7 minutes |
| 4.2.4 Duration of aeration period OFF | Depending on the measured quantities, in the interval min. 10 minutes, max. 30-120 minutes | Depending on the measured quantities, in the interval of min 0.5 minutes, max. 14 minutes |
| 4.2.5 Number of recirculation cycles ON-OFF per day | - | >80 |

**Table no. 3: Recirculation and aeration control - comparison of prior art with presented technical solution**

| | Prior art | Presented technical solution |
|---|---|---|
| 1. Type of activation system | Discontinuous-hybrid, cyclic | Continuous or discontinuous-hybrid, cyclic |
| 2. Method of recirculation | SBR systems: Without recirculation | Pulse intermitted, alternately (asynchronously) with aeration |
| | Cyclic activation systems: Continuous during some phases (e.g. phase of fulfilment-aeration) | |
| 3.Method of aeration | Continuous and/or intermitted in aeration phases of cyclic system | Pulse intermitted, alternately (asynchronously) with recirculation |
| 4. Method of recirculation and aeration control | | |
| 4.1 Control by timer | Control of recirculation: SBR systems - without recirculation | Firmly set short periods of recirculation alternately (asynchronously) with short periods of aeration |
| | Control of aeration: SBR systems - firmly set periods of continuous and/or intermitted operation during the aeration phase, firmly set Duration without aeration during inflow phases and anoxic phase (domestic and small WTPs) | |
| 4.1.1 Controlled device | Electromagnetic or other valve(s) on air piping (domestic and small WTPs) | Electromagnetic or other valve(s) on air piping (domestic, small and medium size WTPs) |
| | | Recirculating device (pump(s)) and air blower(s) (large WTPs) |
| 4.1.2 Duration of recirculation period ON | - | 0.5-14 minutes |
| 4.1.3 Duration of recirculation period OFF | - | 0.5-7 minutes |
| 4.1.4 Duration of aeration period ON | During the aeration phase, 4 min | 0.5-7 minutes |
| 4.1.5 Duration of aeration OFF | During the aeration phase 6 min | 0.5-14 minutes |
| | During the anoxic phase 60 min | |
| 4.1.6 Number of recirculation cycles ON-OFF per day | - | >80 |
| 4.2 Control of measured quantities | On-line measurement of concentration of oxygen and/or nitrogen forms, oxidation-reduction potential or other quantities, automatic increase or decrease of duration of anaerobic, oxic, anoxic phase and sedimentation phase according to set critical values of measured quantities | On-line measurement of concentration of oxygen and/or nitrogen forms, oxidation-reduction potential or other quantities, automatic increase or decrease of duration of recirculation period and aeration period according to set critical values of measured quantities, in the interval of short periods of recirculation and aeration |
| 3.2.1 Controlled device | Electromagnetic or other valve(s) on air piping (domestic, small and medium size WTPs) | Electromagnetic or other valve(s) on air piping (domestic, small and medium size WTPs) |
| | Recirculating device (pump(s)) (large WTPs) | Recirculating device (pump(s)) (large WTPs) |
| 4.2.2 Duration of recirculation period ON | SBR systems - without recirculation | Depending on the measured quantities, in the interval min 0.5 minute, max. 14 minutes |
| | Cyclic activation systems: Depending on the measured quantities, reduction or extension of inflow-aeration phase 2,4 h | |
| 4.2.2 Duration of recirculation period OFF | SBR systems - without recirculation | Depending on the measured quantities, in the interval min. 0.5 minute, max. 7 minutes |
| | Cyclic activation systems: Depending on the measured quantities, reduction or extension of inflow-aeration phase 2,4 h | |
| 4.2.3 Duration of aeration period ON | Depending on the measured quantities, reduction or extension of anaerobic, anoxic and oxic phase | Depending on the measured quantities, in the interval min. 0.5 minutes, max. 7 minutes |
| 4.2.4 Duration of aeration period OFF | Depending on the measured quantities, reduction or extension of anaerobic, anoxic and oxic phase | Depending on the measured quantities, in the interval min 0.5 minutes, max. 14 minutes |
| 4.2.5 Number of recirculation cycles ON-OFF per day | - | >80 |

**Table no. 4: Hydraulic retention time in the anaerobic zone and volumetric ratio between the anaerobic zone, anoxic zone and oxic zone - comparison of prior art with presented technical solution**

| | Prior art | Presented technical solution |
|---|---|---|
| Type of activation system | Continuous | Continuous |
| Hydraulic retention time in the anaerobic zone | <3 hours | 7-15 hours |
| Volumetric ratio between the anaerobic zone, anoxic and oxic zone | 1:2:4 to 1:2:8 | 1:1:1 to 1:2:4 |

The advantage of the technological solution according to this utility model compared to the present state of art is the significantly improved effectiveness of wastewater treatment in the bioreactor, i.e. significantly improved effectiveness of nitrogen and phosphorus removal under conditions of significant fluctuation of hydraulic and organic matter load during day, week and season, and significantly reduced consumption of energy as well as operational demands.

Reference signs serve for detailed clarification of the technological solution and are not limiting in relation to the scope of protection, as well as the listed examples do not represent any limits to the scope of protection.

### Overview of Figures with Drawings

The nature of the technological solution is further clarified in examples of its implementation, which are described based on the attached drawings showing the following:
- Figure 1: Control of recirculation and aeration - Example No. 1
- Figure 2: Aeration period (aeration ON, recirculation OFF) - Example No. 1
- Figure 3: Recirculation period (recirculation ON, aeration OFF) - Example No. 1
- Figure 4: Control of recirculation and aeration - Example No. 2
- Figure 5: Idle period (recirculation OFF, aeration OFF) - Example No. 2
- Figure 6: Control of recirculation and aeration - Example No. 3
- Figure 7: Aeration period (aeration ON, recirculation Ymin) - Example No. 3
- Figure 8: Recirculation period (recirculation Ymax, aeration OFF) - Example No. 3
- Figure 9: Aeration period (aeration Ymax, recirculation Ymin) - Example No. 3
- Figure 10: Recirculation period (recirculation Ymax, aeration Ymin) - Example No. 3
- Figure 11: Control of recirculation and aeration - Example No. 4
- Figure 12: Aeration period (aeration ON, recirculation OFF) - Example No. 4
- Figure 13: Recirculation period (recirculation ON, aeration OFF) - Example No. 4
- Figure 14: Control of recirculation and aeration - Example No. 5
- Figure 15: Control of recirculation and aeration - Example No. 6
- Figure 16: Distribution of phosphorus concentration at the bioreactor 1 inlet and at the bioreactor 1 outlet during long-term testing
- Figure 17: Distribution of nitrogen compounds concentration at the bioreactor 1 inlet and at the bioreactor 1 outlet during long-term testing

### Examples of Embodiments

### Example No. 1

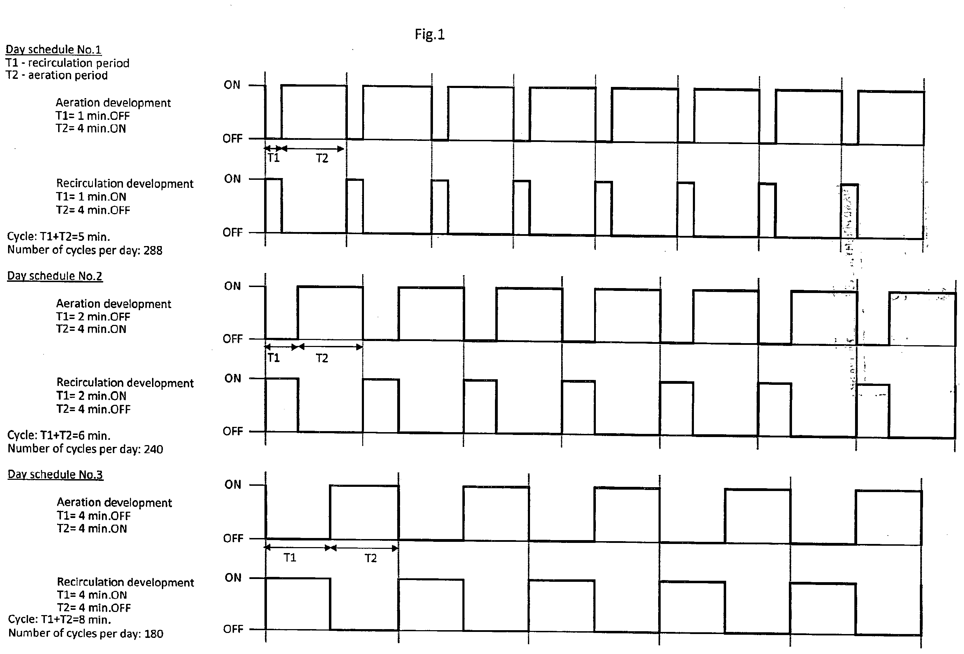

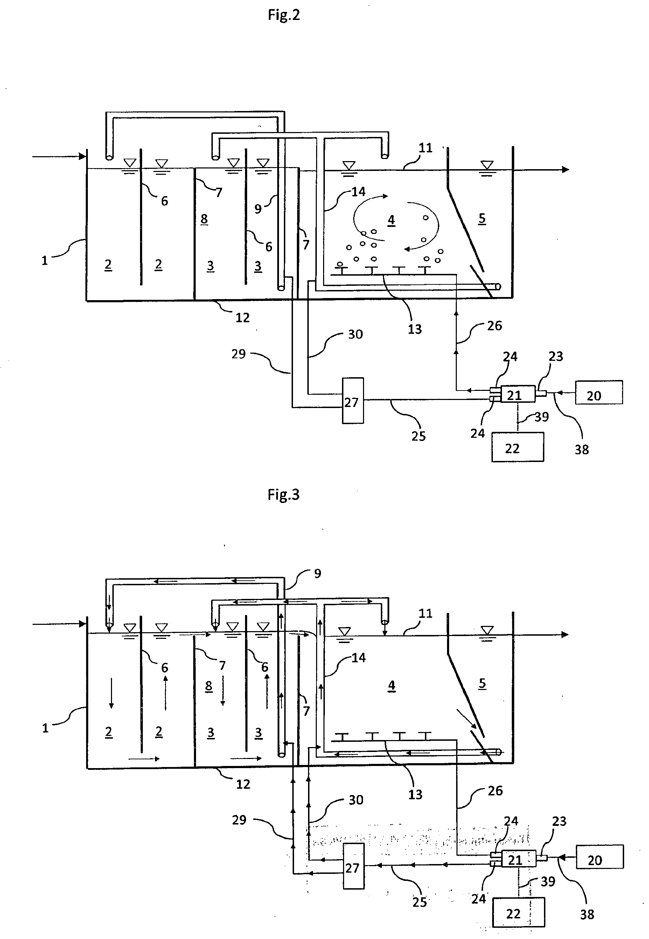

The bioreactor 1 for wastewater treatment using activated sludge process with enhanced removal of nitrogen and phosphorus for individual and decentralized solutions, with a unit for control of aeration, recirculation and mixing of the MLSS, is shown in the schematic diagram in Figs. 2, 3. Fig. 1 shows three fixed daily schedules (day schedules 1 to 3) integrated into the control unit 22. In the control unit 22 can be integrated even more various fixed daily schedules adapted to the capacity of the bioreactors 1 and capacity of the respective air blowers 20 and the recirculation units 9, 14 from type range of domestic wastewater treatment devices. In selection of the daily schedule for operation of bioreactor 1, decisive factors are the calculated recirculation ratio and calculated amount of air used for aeration, mixing and recirculation. Recirculation ratio is calculated from the design maximum hourly flow rate and maximum capacity of recirculation pumps 9, 14, wherein the standard daily schedule is selected such that the calculated recirculation ratio ranges approximately between 3 and 4. The amount of air required is calculated according to the established calculation formulae for removal of organic pollution with consideration of nitrification and denitrification effects and from calculation of the volume required for operation of the recirculation air-lift pumps 9, 14 or other air consumers not shown in the bioreactor 1 diagrams; for the selected air blower 20 capacity the daily schedule must meet the condition of supplying the required amount of air by totality of aeration periods per day.

The tank of bioreactor 1 contains the anaerobic zone 2, the anoxic zone 3, the oxic zone 4, the final settlement zone 5, where the anaerobic zone 2 and the anoxic zone 3 are separated, in the direction of the flow, by under baffles 6 and over baffles 7, which form a vertical flow labyrinth 8.

Wastewater containing gross impurities flows into the initial part of the anaerobic zone 2 of the vertical flow labyrinth 8, where mechanical pre-treatment takes place, using a removable basket for gross impurities, not shown in the figure. The initial part of the anaerobic zone 2 is connected to the outlet of the internal MLSS recycle from the terminal part of the anoxic zone 3 using the recirculation unit - the air-lift pump 9, which causes internal recirculation and mixing in the vertical flow labyrinth 8. Mechanically pre-treated wastewater flows through the vertical flow labyrinth 8, where the under baffles 6 and over baffles 7 direct the current of the MLSS upwards and downwards, i.e. direction of the flow is mostly vertical and the distance between respective partitioning walls is chosen so that the flow of the MLSS between the partition walls is predominantly in plug-flow (piston) regime. From the vertical flow labyrinth 8, the MLSS flows into the oxic zone 4. In the oxic zone 4, fine-bubble aeration elements 13 are located at the bottom 12, providing aeration and mixing of the MLSS. The MLSS flows from the oxic zone 4 to the final settlement zone 5, where the activated sludge is separated from the treated water and the treated water flows into the outlet of the bioreactor 1. The activated sludge from the bottom of the final settlement zone 5 is pumped using the recirculation device - the air-lift pump 14 - partly to the oxic zone 4 as return sludge recycle and partly to the anoxic zone 3 of the vertical flow labyrinth 8 as NOx recycle. The excess sludge is removed after high concentration has been reached in the bioreactor 1 by pumping and disposal once or twice a year, depending on loading of the bioreactor 1.

Pressure air for aeration of the oxic zone 4 and operation of the air-lift pumps 9, 14 is delivered by the air blower 20 via a three-way solenoid valve 21. The air blower 20 continuously blows the air through an air piping 38 into the three-way solenoid valve 21, which has one inlet port 23 and two outlet ports 24, one of them being connected to the air piping 25, the other to the air branch 26 for aeration. The three-way solenoid valve 21 is controlled by the control unit 22 via a wired connection 39. The control unit 22 has integral fixed daily schedules according to Fig. 1 and provides signal to switch the three-way solenoid valve 21 in accordance with activated time schedule alternately to one or the other position through the wired connection 39, which directs air flow into the air piping 25 or the air branch 26 for aeration. The air piping 25 is connected to an air distribution unit 27, which divides the air into the air branches 29, 30 for recirculation and the air-lift pumps 9, 14. The air blower 20 operates continuously and is not controlled by the control unit 22.

Basic parameters of the tested type of bioreactor 1 for 6 PE (population equivalent):
- Nominal organic daily load: 0.36 kg BOD5/d
- Nominal hydraulic daily flow rate: 0.90 m3/d

Dimensions of the tested bioreactor type for 6 PE:

| | | |
|---|---|---|
| - Volume of the anaerobic zone 2 | | 480 L |
| - Volume of the anoxic zone 3 | | 480 L |
| - Volume of the oxic zone 4: | | 930 L |
| - Volume of the final settlement zone 5: | | 260 L |
| - Hydraulic retention time in the anaerobic zone 2 | HRTₐₙₐₑᵣ | 12.8 hrs |
| - Hydraulic retention time in the anoxic zone 3 | HRTₐₙₒₓ | 12.8 hrs |
| - Hydraulic retention time in the oxic zone 4 | HRTₒₓ | 24.8 hrs |
| - Sludge retention time in the anaerobic zone 2 | SRTₐₙₐₑᵣ | 20.8 d |
| - Mean sludge concentration at the bottom 12 of the anaerobic zone 2 | | 22.5 kg/m3 |
| - Mean sludge concentration at the level 11 of the anaerobic zone 2 | | 3.5 kg/m3 |
| - Capacity of the air-lift pump 9 for internal MLSS recycle | | 22.4 L/min |
| - Capacity of the air-lift pump 14 for return sludge and NOx recycle | | 22.4 L/min |
| - Air blower capacity 20 | | 64 L/min |
| - Selected optimum time schedule | | "1" |
| - Number of cycles in time schedule "1" | | 288 |
| - Duration of aeration period | | 4 minutes |
| -Duration of recirculation period | | 1 minute |
| - Cycle duration | | 5 minutes |
| - Total duration of aeration per day | | 19.2 hrs |

A method of wastewater treatment with activated sludge in the bioreactor 1 using activated daily schedule No. 1 shown in Fig. 1 is characterized by the following processes:
- During the short aeration period (Fig. 2) in duration of T2 = 4 minutes, aeration and mixing of the MLSS takes place in the oxic zone 4, when the pressure air from the air blower 20 is redirected into the oxic zone 4 to the aeration elements 13 while recirculation and mixing of the MLSS is stopped by closing of air piping 25 leading to the recirculation air-lift pumps 9, 14. In the oxic zone 4, process of aerobic oxidation of organic substances by aerobic heterotrophic bacteria, rapid biochemical nitrification of ammonium ions and nitrite ions by aerobic chemoautotrophic bacteria and phosphorus accumulation in phosphorus-accumulating bacteria using chemically-bound energy from intracellular poly-β-hydroxyalkanoate (PHA) storage substances take place, in presence of oxygen dissolved in the MLSS and during its complete mixing using the pressure air supplied through the aeration element 13 under oxic condition. Oxic conditions in the oxic zone 4 are characterized by increase of oxidation-reduction potential (ORP) during this period from about -50 to +50 mV to about +100 to +200 mV and of oxygen concentration from about 0.5 mg/L to over 1.5 mg/L O₂. Stopping recirculation and mixing of the MLSS in the vertical flow-through labyrinth 8 with the anaerobic zone 2 and the anoxic zone 3 supports vertical stratification of sludge blanket by settling of heavier particles from raw wastewater and heavier activated sludge floc particles from the MLSS with average sludge concentration about 15-25 kg/m3 at the bottom 12 and lighter particles and floc particles of the activated sludge closer to the level 11 of water with average sludge concentration of about 2-5 kg/m3, thereby creating optimum anaerobic conditions with ORP -200 to -450 mV closer to the bottom 12 of the anaerobic zone 2 and the anoxic zone 3 and ORP -50 to -150 mV closer to the water level 11. Closer to the bottom 12 of the vertical flow labyrinth 8, hydrolysis and fermentation of settleable and colloidical biodegradable organic substances and the activated sludge floc particles takes place using fermenting bacteria, wherein easily available substrate in form of short-chain fatty acid is produced in situ in the bioreactor 1.
- During the short recirculation period (Fig. 3) in duration of T1 = 1 minute, aeration and mixing of the oxic zone 4 is stopped by redirecting the pressure air from the air blower 20 to the recirculation air-lift pumps 9, 14 and recirculation and mixing of the MLSS take place in the anaerobic zone 2 and anoxic zone 3. The recirculation air-lift pumps 9, 14 provide recirculation of the MLSS: return sludge recycle from the final settlement zone 5 to the oxic zone 4, NOx recycle to the anoxic zone 3 and internal MLSS recycle between the anoxic zone 3 and the anaerobic zone 2 in the vertical flow labyrinth 8. In the oxic zone 4, soluble oxygen concentration is reduced by assimilation of organic substances, while residual dissolved oxygen is consumed by aerobic heterotrophic bacteria as electron-acceptor substrate. In the anoxic zone 3, rapid biochemical denitrification process takes place at short-term high concentration of oxidized nitrogen compounds from the NOx recycle through reduction by heterotrophic denitrification bacteria in presence of easily available substrate in form of short-chain fatty acids, which were produced in the stratified sludge blanket layer at the bottom 12 of the anaerobic zone 2 and the anoxic zone 3, and are washed out of the stratified sludge layer in the anaerobic zone 2 and the anoxic zone 3 by internal MLSS recycle together with fermenting bacteria, wherein the MLSS recirculated by internal MLSS recycle with content of fermentative bacteria inoculates the raw wastewater and the MLSS from NOx recycle with fermentative bacteria. Short duration of recirculation period does not significantly disturb vertical stratification inside the vertical flow labyrinth 8 but provides optimum recirculation ratio 3:1, which is achieved through the capacity of the air-lift pumps 14 of 22.4 L/min, at NOx recycle with 288 cycles per day and maximum hourly wastewater flow rate of Qm,h=90 L/h, and further provides recirculation ratio of internal MLSS recycle 3:1 inside the vertical flow labyrinth 8, which is determined by the air-lift pump 9 capacity of 22.4 L/min of internal MLSS recycle inside the vertical flow labyrinth 8 at 288 cycles per day and maximum hourly wastewater flow rate of Qm,h=90 L/h. In the anaerobic zone 2, phosphorus-accumulating bacteria perform rapid biochemical assimilation of the produced short-chain fatty acids into intracellular storage compounds with chemically-bound energy.

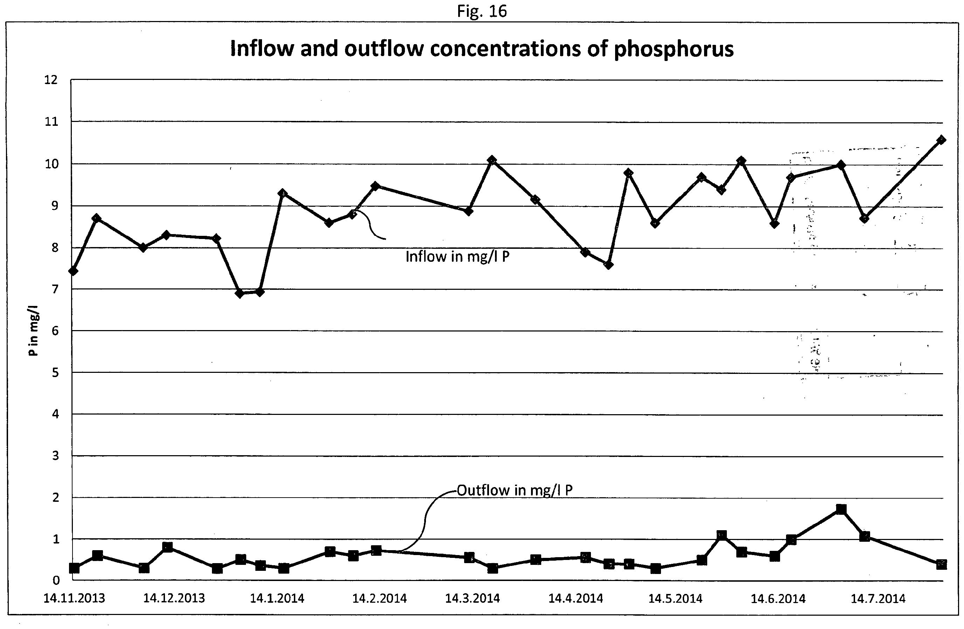

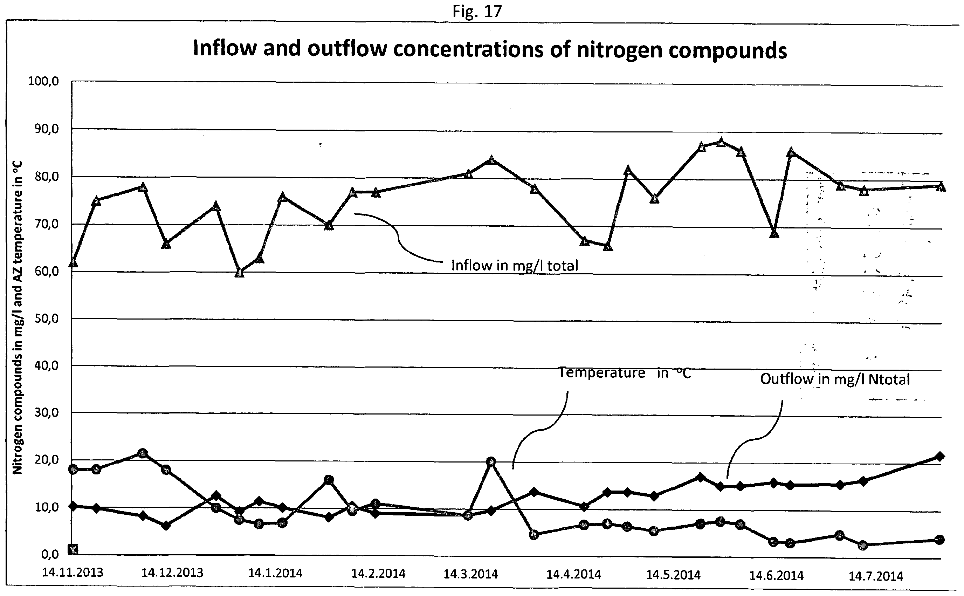

Table 5 lists results of long-term effectiveness testing of bioreactor 1 using the method of wastewater treatment according to this technological solution. The table indicates that the device achieves the required concentration Nₜₒₜₐₗ below 10 mg/L and the total phosphorus concentration Ptotal below 1 mg/L with nitrogen removal effectiveness over 93 % and phosphorus removal effectiveness over 93 %. Consumption of energy was 0.17 kWh/d, PE (PE - number of connected equivalent population). Distribution of concentrations of nitrogen and phosphorus compounds in the bioreactor 1 inlet and in the bioreactor 1 outlet during long-term testing is shown in Figs. 16 and 17.

**Table 5**

| Parameters | BOD5 | | Ntotal+ | | Ptotal | |
|---|---|---|---|---|---|---|
| | Concentration mg/L | Treatment effectiveness % | Concentration mg/L | Treatment effectiveness % | Concentration mg/L | Treatment effectiveness % |
| Raw wastewater | 386 | - | 77 | - | 9.0 | - |
| Treated wastewater | 5.9 | 98.5 | 5.3⁺ | 93.1⁺ | 0.6 | 93.3 |

| | | | | | | |
|---|---|---|---|---|---|---|
| + for MLSS temperatures ≥12 °C | | | | | | |

### Example No. 2

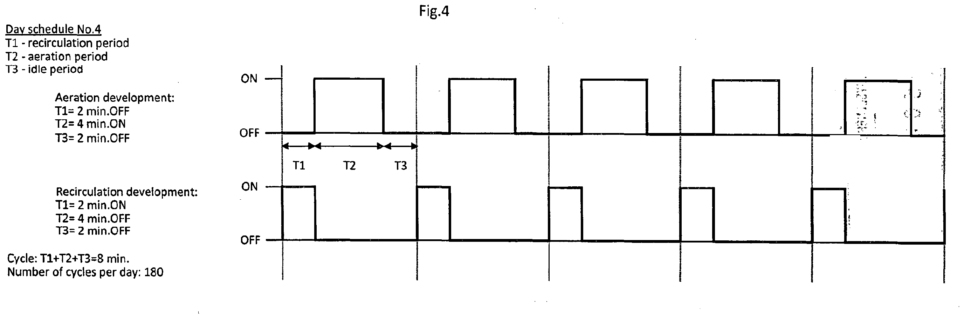

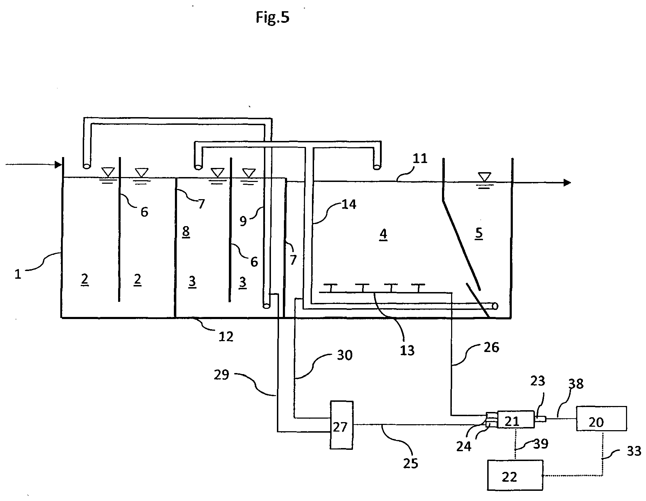

Bioreactor 1 according to the Example No. 1; the control unit 22 uses wired connection 39 to control the three-way solenoid valve 21 and a wired connection 33 to control the air blower 20 with aeration and recirculation control based on alternating three periods (see Fig. 4 - daily schedule No. 4): the aeration period according to the Example No. 1, the recirculation period, and the idle period:
- During the idle period (Fig. 5) lasting T3 = 2 minutes, the air blower 20 stops and supplies pressure air neither for driving the recirculation air-lift pumps 9, 14, nor for the aeration elements 13. In the oxic zone 4, reduction of dissolved oxygen concentration continues through assimilation of organic compounds by aerobic heterotrophic bacteria and denitrification takes place inside activated sludge floc particles, wherein concentration of the dissolved oxygen drops below 0.5 mg/L. Inside the sections of vertical flow labyrinth 8 with the anaerobic zone 2 and the anoxic zone 3, recirculation as well as mixing of the MLSS is still stopped and sedimentation and further vertical stratification of the sludge blanket take place.
- During recirculation period (Fig. 3) lasting T = 2 minutes, operation of the air blower 20 resumes and pressure air is redirected to the recirculation air-lift pumps 9, 14, which provide recirculation and mixing of the MLSS in the anaerobic zone 2 and the anoxic zone 3, and, at the same time, the air branch 26 for aeration is being closed. Introducing the idle period before the recirculation period reduces concentration of the dissolved oxygen in NOx recycle into the anoxic zone 3, which improves the effectiveness of nitrogen removal, and even more prevents the influx of nitrified nitrogen into the anaerobic zone 2, which improves the effectiveness of phosphorus removal. Short duration of the recirculation period does not significantly disturb principally vertical stratification inside the vertical flow labyrinth 8, which has been further supported by the preceding idle period. The air blower 20 operates 18 hours per day. Introduction of the idle period reduced consumption of energy to 0.13 kWh/d,PE (PE-number of connected population equivalent).

### Example No. 3

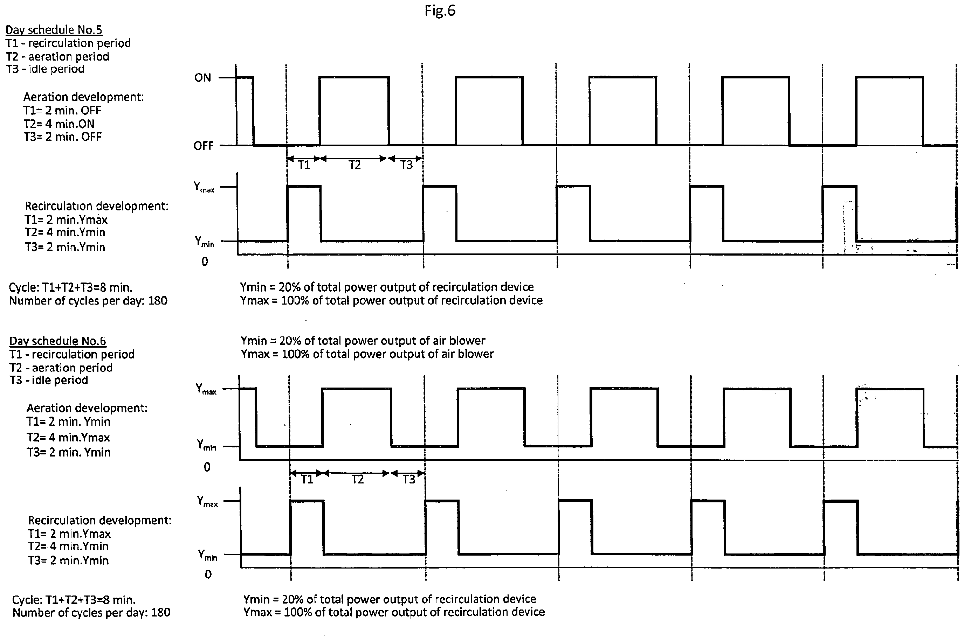

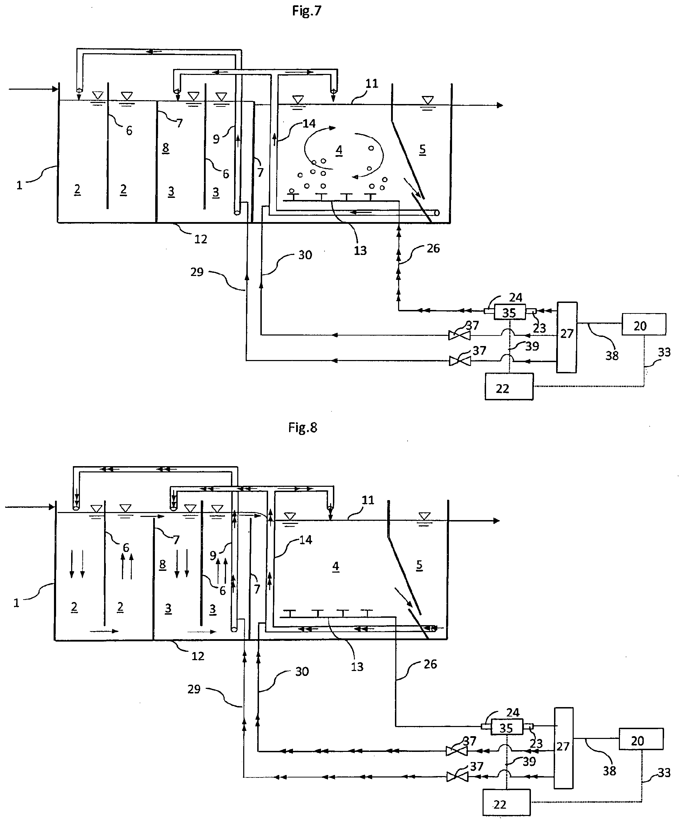

Bioreactor 1 according to the Example No. 1; the control unit 22 uses the wired connection 39 to control a three-way solenoid valve 35, which is shut under normal condition, or uses the wired connection 33 to control the air blower 20 with aeration and recirculation control based on alternating two or three periods (see Fig. 6 - daily schedules No. 5 and 6); possible arrangement of air distribution shown in Figs. 7, 8 or Figs. 9, 10.

Figs. 7, 8 show arrangement of air distribution with daily schedule No. 5 in Fig. 6. Pressure air for aeration of the oxic zone 4 and for operating the recirculation air-lift pumps 9, 14 is supplied by the air blower 20 via the air piping 38 and the air distribution unit 27, which distributes the air to the air branches 29, 30 for recirculation, to the air-lift pumps 9, 14, and to an air branch 26 for aeration to the aeration elements 13. Normally, on the pressure air branch 26 for aeration is the shut two-way solenoid valve 35 with the inlet port 23 and the outlet port 24. The air branches 29, 30 for recirculation leading to the air-lift pumps 9, 14 contain valves 37, which control the air flow rate. The two-way solenoid valve 35 is controlled using the control unit 22 via the wire connection 39. The control unit 22 has integral fixed daily schedules according to Fig. 1 or Fig. 2 and provides signal, according to the selected time schedule, for periodic short opening of the two-way solenoid valve 35, wherein the pressure air starts to flow into the air branch 26 for aeration and simultaneously the pressure drops in the air branches 29, 30 for recirculation and, depending on setting of the valves 37, only minimum amount of air gets into the air-lift pumps 9, 14 under the reduced air pressure, which causes the reduced intensity of recirculation Yₘᵢₙ and of mixing of the MLSS in the anaerobic zone 2 and the anoxic zone 3, equal to about 20 % of the total power output of the recirculation air-lift pumps 9 and 14, which still maintains the concentration gradient between the MLSS concentration at the bottom 12 and at the level11.

When the two-way solenoid valve is shut for a short period, the air only flows to the air branches 29, 30 for recirculation for supplying the air-lift pumps 9, 14 to recirculate the MLSS with the highest intensity Yₘₐₓ being equal to the maximum power output of the recirculation air-lift pumps 9 and 14. The air blower 20 can be operated continuously according to the Example No. 1 or discontinuously according to the Example No. 2 with the idle period.

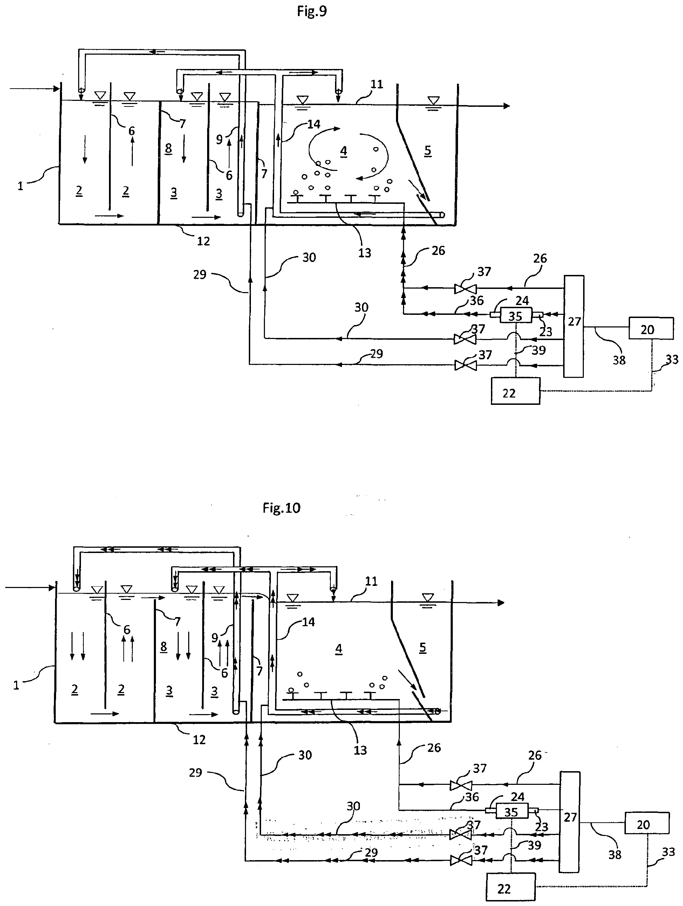

Figs. 9, 10 show arrangement of the air distribution with daily schedule No. 6 shown in Fig. 6. Two-way solenoid valve 35 is connected to a bypass air piping 36, through which it is further possible to supply the air to air branch 26 for aeration, if the solenoid valve 35 is open during the short aeration period. The valves 37 are set in such manner that during the aeration period, only minimum amount of the air passes to the air branches 29, 30 for recirculation, which reduces the intensity of recirculation Ymin and of mixing of the MLSS in the anaerobic zone 2 and the anoxic zone 3, equal to about 20 % of the total power output of the recirculation air-lift pumps 9 and 14, or that during the recirculation period only minimum amount of air passes to the air branch 26 for aeration, which reduces the intensity of aeration Ymin and of mixing of the MLSS in the oxic zone 4, equal to about 20 % of the total power output of the air blower 20 and thus the condition of low intensity of recirculation and of mixing of the MLSS during the aeration period or the low intensity of aeration and of mixing of the MLSS during the recirculation period was met.

### Example No. 4

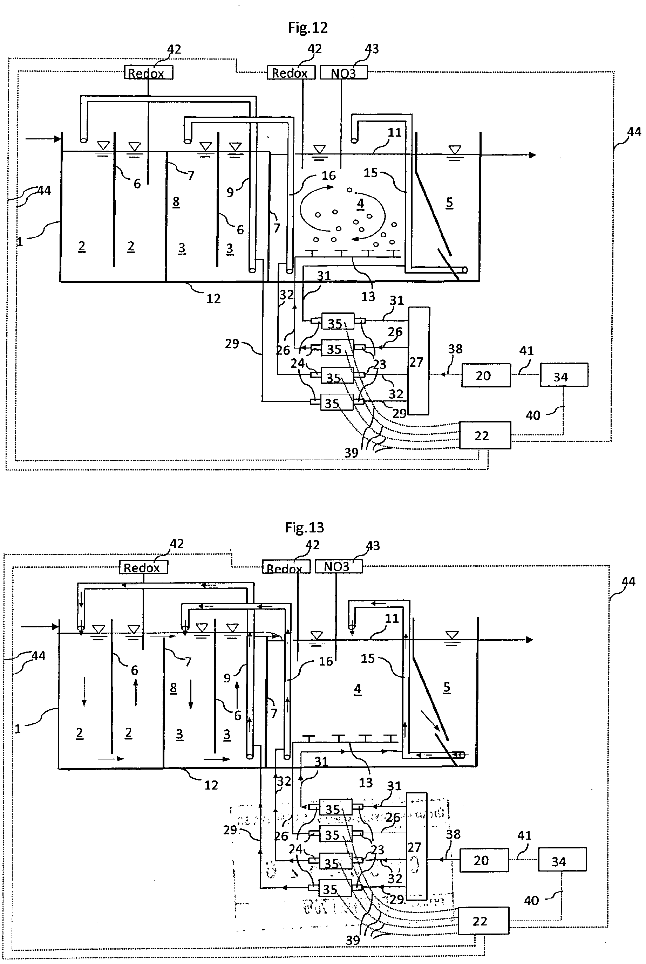

The bioreactor 1 according to Example No. 1, with return sludge recycle from the final settlement zone 5 to the oxic zone 4, NOx recycle from the oxic zone 4 to the anoxic zone 3, internal MLSS recycle from the anoxic zone 3 to the anaerobic zone 2; diagram of the bioreactor 1 with arrangement of air distribution is shown in Figs. 12 and 13.

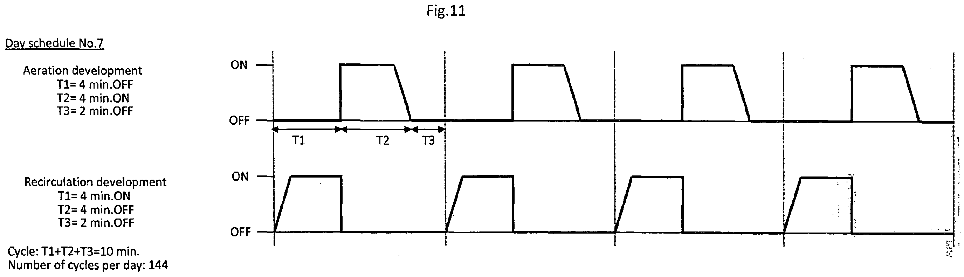

The activated sludge from the bottom of the final settlement zone 5 is pumped, using the recirculation unit - an air-lift pump 15, to the oxic zone 4 as return sludge recycle. NOx recycle is driven by the recirculation unit - an air-lift pump 16 - and flows from the oxic zone 4 to the anoxic zone 3 of the vertical flow labyrinth 8. The excess sludge with elevated phosphorus content is pumped into an aerated sludge tank, not shown in Figs. 12 and 13. The pressure air for aeration of the oxic zone 4 and for driving the air-lift pumps 9, 15, 16 is provided by the air blower 20, which is controlled by a frequency converter 34 to continuously change revolution frequency of the electric motor of the air blower 20. The air blower 20 is connected to the air piping 38 and the air distribution unit 27, which distributes the pressure air into the air branch 26 for aeration, into the air branch 31 for return sludge recirculation, the air branch 32 for NOx recirculation and the air branch 29 for an internal MLSS recirculation. Each air branch (29, 31, 32) for recirculation contains the two-way solenoid valve 35 controlled by the control panel 22 through the wired connection 39 which also controls operation of the frequency converter 34 via the wired connection 40. The frequency converter 34 changes the current frequency of the electric motor of the air blower 20 so that starting and stopping of the air blower 20 is smooth. The two-way solenoid valves 35 are controlled using the control unit 22 with integral algorithm for changing the fixed schedules with the aeration, recirculation and idle periods, such as daily schedules No. 7 or No. 8 in Fig. 11. The bioreactor 1 contains probes 42, 43 for measuring oxidation-reduction potential and nitrate form of nitrogen with outputs 44 connected to the control unit 22. The integral algorithm can be based on optimization of redox potential values in the anaerobic zone 2, the anoxic zone 3 and the oxic zone 4 and of target concentrations of nitrate nitrogen in the oxic zone 4 but it is possible to use other measuring probes or to combine results of the measuring probes with flow rate measurement of the wastewater and the recirculated MLSS. According to integral algorithm, the two-way solenoid valves 35 allow the pressure air to enter alternately into the air branch 26 for aeration and the air branches 29, 31, 32 for recirculation. Similarly, daily schedules can have variable durations of the short periods of aeration, recirculation and mixing of the MLSS.

The method of wastewater treatment using activated sludge is characterized by the following processes:
- During operation of the wastewater treatment plant with daily schedule No. 7 according to Fig. 11, the increase of the organic matter load occurs. This causes drop of redox potential in the oxic zone 4, which is interpreted by the algorithm of the control unit 22 so that it automatically selects another integral fixed daily schedule with longer aeration periods and shorter recirculation periods, or selects a schedule with shorter idle period. The control unit also evaluates measurement of the redox probe in the anaerobic zone 2 and the nitrate probe in the oxic zone 4 and evaluates the development of the measured parameters in time; based on the observed trends, it selects other daily schedule with shorter or longer aeration, recirculation and idle periods.
- When load of the treatment plant is decreased, for example during the night, redox potential in the oxic zone 4 is increased, which is evaluated by the algorithm of the control unit 22 so that it automatically selects another integral fixed daily schedule with shorter aeration periods and longer recirculation periods, or selects a schedule with longer idle period. The control unit also evaluates measurement of the redox probe in the anaerobic zone 2 and of the nitrate probe in the oxic zone 4 and evaluates the development of the measured parameters in time. Based on the observed trends, it selects other daily schedule with shorter or longer aeration, recirculation and idle periods.
- During short aeration period (aeration ON, recirculation OFF, Fig. 12) lasting T2 = 4 minutes, aeration and mixing of the MLSS takes place in the oxic zone 4 by opening the solenoid valve on the air branch 26 for aeration with parallel stopping of recirculation and mixing in the anaerobic zone 2 and the anoxic zone 3 by shutting the solenoid valves 35 on the air branches 29, 31, 32 for recirculation. In the oxic zone 4, process of aerobic oxidation of organic substances by aerobic heterotrophic bacteria, rapid biochemical nitrification of ammonium ions and nitrite ions by aerobic chemoautotrophic bacteria, and phosphorus accumulation in phosphorus-accumulating bacteria using chemically-bound energy from intracellular PHA storage substances take place, in presence of oxygen dissolved in the MLSS and during its complete mixing using pressure air supplied through the aeration element 13 under oxic conditions. During this period, oxic conditions in the oxic zone 4 are characterized in increase of oxidation-reduction potential (ORP) from about -50 to +50 mV to about +100 to +200 mV and of oxygen concentration from about 0.5 mg/L to over 1.5 mg/L O₂. Parallel stopping of recirculation of the MLSS in the vertical flow labyrinth 8 with the anaerobic zone 2 and the anoxic zone 3 supports vertical stratification of the sludge blanket by settling of heavier particles from the raw wastewater and heavier activated sludge floc particles from the MLSS with average sludge concentration approximately 15-25 kg/m3 at the bottom 12 and lighter particles and floc particles of the activated sludge with average sludge concentration of approximately 2-5 kg/m3 closer to the level 11 of water, thereby creating optimum anaerobic conditions characterized in ORP -200 to -450 mV closer to the bottom 12 of anaerobic zone 2 and the anoxic zone 3 and ORP -50 to -150 mV closer to level 11 of water. Closer to the bottom 12 of the vertical flow labyrinth 8, process of hydrolysis and fermentation of the settleable and colloidical biodegradable organic substances and the activated sludge floc particles take place using fermentative bacteria, wherein easily available substrate in form of short-chain fatty acids are formed in situ in the bioreactor 1.
- During the idle period (recirculation OFF, aeration OFF) lasting T3 = 2 minutes, intensity of aeration is continuously decreased using the frequency converter 34 while the solenoid valve 35 on the air branch 26 for aeration is open, and recirculation of the MLSS together with the solenoid valves 35 on air branches 29, 31, 32 for recirculation are still shut down. In the oxic zone 4, the drop of dissolved oxygen concentration continues through assimilation of organic compounds by aerobic heterotrophic bacteria and simultaneous denitrification in activated sludge floc particles takes place, which reduces concentration of dissolved oxygen below 0.5 mg/L. Inside the sections of vertical flow labyrinth 8 with the anaerobic zone 2 and anoxic zone 3zone, recirculation and mixing of the MLSS is still stopped and sedimentation and further vertical stratification of the sludge blanket takes place.
- During short recirculation period (recirculation ON, aeration OFF, Fig. 13) lasting T1 = 2 minutes, recirculation of the MLSS takes place due to continuous start-up of the air blower 20 using the frequency converter 34, when the pressure air is redirected by shutting the solenoid valve 35 on the air branch 26 for aeration and opening the air branches 29, 31, 32 for recirculation. Recirculation units 9, 15, 16 provide recirculation of the MLSS: return sludge recycle from the final settlement zone 5 to the oxic zone 4, NOx recycle from the oxic zone 4 to the anoxic zone 3 and internal MLSS recycle from the anoxic zone 3 to the anaerobic zone 2 in the vertical flow labyrinth 8. In the oxic zone 4, concentration of soluble oxygen is reduced by assimilation of organic substances, while residual dissolved oxygen is consumed by aerobic heterotrophic bacteria as electron-acceptor substrate and after depletion of the dissolved oxygen, mostly in activated sludge floc particles, simultaneous denitrification takes place. In the anoxic zone 3, rapid biochemical denitrification process takes place at short-term high concentration of oxidized nitrogen compounds through reduction by heterotrophic denitrification bacteria in presence of easily available substrate in form of short-chain fatty acids, produced in the stratified sludge blanket layer at the bottom 12 of the anaerobic zone 2, and washed out of the stratified sludge layer in the anaerobic zone 2 together with fermenting bacteria, by internal MLSS recycle, wherein the MLSS recirculated by internal MLSS recycle with fermenting bacterial content inoculates the raw wastewater and the MLSS from NOx recycle with fermenting bacteria. In the anaerobic zone 2, phosphorus-accumulating bacteria perform rapid biochemical assimilation of the produced short-chain fatty acids, creating chemically-bound energy in form of intracellular storage compounds.

### Example No. 5

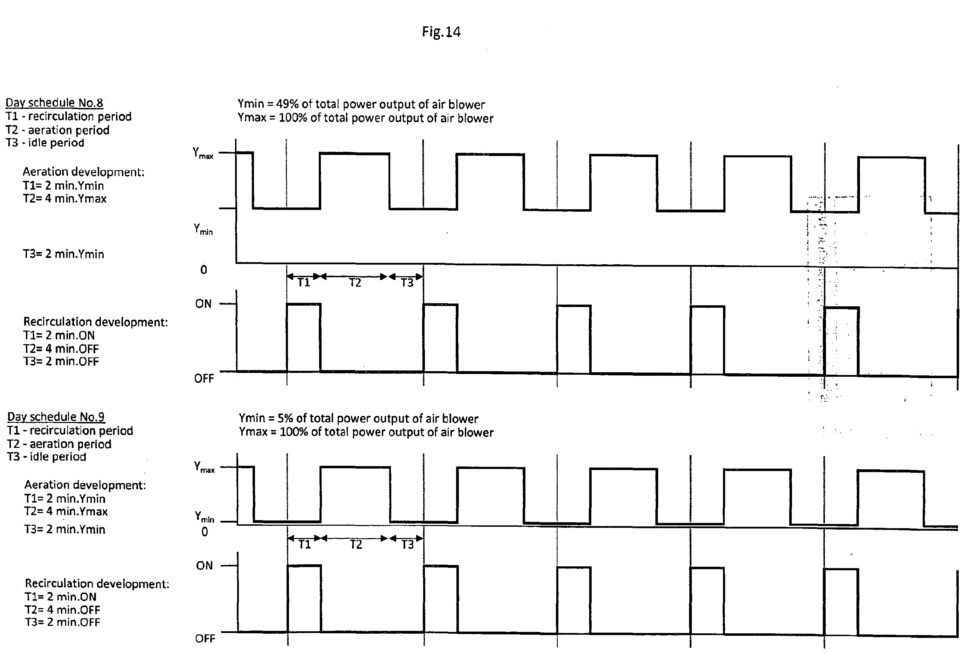

Decreasing intensity of recirculation and mixing or aeration and mixing, during short periods, can take about 5 % to 49 % of the maximum power output of the recirculation unit or the air blower; development of aeration and recirculation is shown in Fig. 14, daily schedule No. 8 and 9.

### Example No. 6

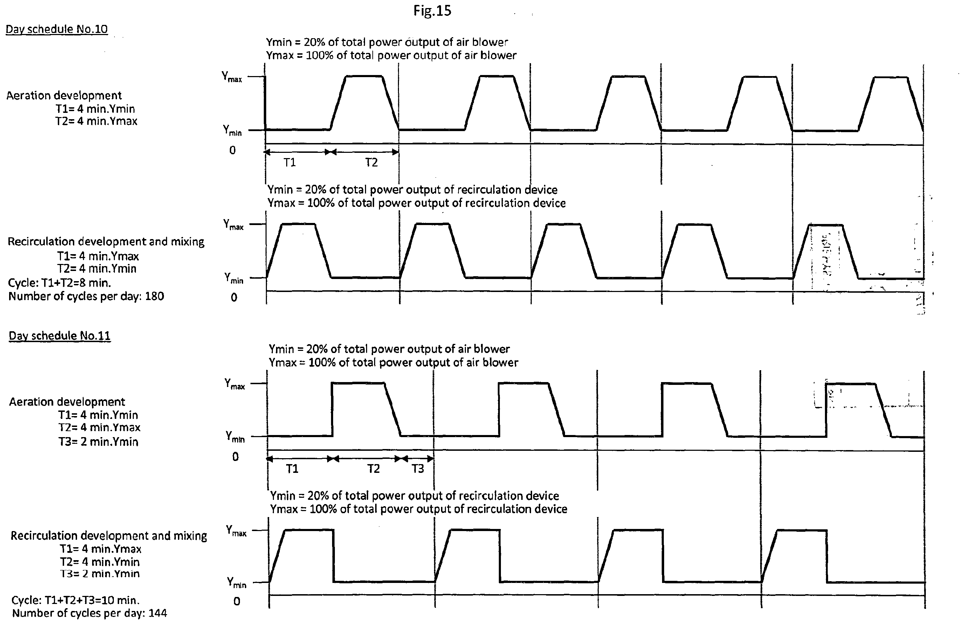

Instead of the air-lift pumps 9, 14, 15, 16, recirculation and mixing of the MLSS can be driven by the recirculation pumps and the mixing units equipped with the frequency converters or other units for smooth increase and decrease of revolution frequencies of electric motors used by pumps and mixing units, especially in wastewater treatment plants with higher capacities. Possible development of aeration and recirculation is shown in Fig. 15, daily schedules No. 10 and No. 11. Alternation of short periods of recirculation, mixing and aeration is achieved by independent control of the air blowers, the recirculation pumps and the mixing units.

### Example No. 7

Instead of using the solenoid valves 21, 35 for automatic, short-term alternating opening and closing of air branches 26 for aeration and air branches 29, 31, 32 for recirculation, other valves with electric, pneumatic, or hydraulic actuators can be used. Instead of the frequency changers 34, various other devices can be used for continuously changing revolution rates of the electric motors of the air blower and the recirculation unit, e.g. an engine soft starter and other, similar devices.

### Example No. 8

Measuring devices 42, 43 for on-line measurement of parameters can also include, besides the probes for measuring oxidation-reduction potential and the nitrate probes, probes for measurement of other nitrogen compounds, phosphorus, oxygen, units for measurement flow rate of the wastewater and recirculation streams of the MLSS etc.

### Industrial Applicability

Method and device for treatment of wastewater using activated sludge process with enhanced nitrogen and phosphorus removal according to presented invention can be applied in wastewater treatment plants, not only for small, isolated sources of pollution, but also for decentralized solutions of wastewater treatment in areas where connection to the public sewage system would be excessively expensive solution. The solution according to presented invention allows for remote monitoring and control of cleaning process in the individual wastewater treatment plants and the quality of treated water fulfills strict requirements in terms of nitrogen and phosphorus removal from wastewater, thus it is possible to use these devices also for discharge of treated water into surface water in sensitive areas where threat of eutrophication of surface water exists, for discharge into surface water suitable for bathing and recreation, for discharge into groundwater and the treated water can be used as well for flushing toilets or as service water. Method of aeration and recirculation control of the mixed liquor is not limited only to individual and small wastewater treatment plants and sewage and municipal wastewater, but can be used also in medium-size and large wastewater treatment plants with a capacity approximately up to 50,000 population equivalents, and for biodegradable wastewater from the agro-food industry

## Claims

1. A method of wastewater treatment with enhanced removal of nitrogen and phosphorus through activated sludge process in a device for wastewater treatment comprising a bioreactor (1), which includes an anaerobic zone (2), an anoxic zone (3), an oxic zone (4) and a final settlement zone (5), where the anaerobic zone (2) and the anoxic zone (3) are separated by under baffles (6) and over baffles (7) arranged so that the flow direction of the mixed liquor is predominantly in plug-flow regime and predominantly vertical, with recirculating pumps providing return sludge recycle from the final settlement zone (5) to the oxic zone (4), nitrogen oxide (NOx) recycle from the oxic zone (4) or the final settlement zone (5) to the anoxic zone (3), and internal mixed liquor suspended solids (MLSS) recycle from the anoxic zone (3) to the anaerobic zone (2), said method including the controlling of aeration, recirculation and mixing of the mixed liquor by intermitted operation in such a manner that short aeration periods alternate with short recirculation periods and one short aeration period together with one short recirculation period constitutes one cycle, wherein:
- within one cycle, the aeration period lasts 0.5 to 7 minutes, optimally 3 to 5 minutes, and the recirculation period lasts 0.5 to 14 minutes, optimally 1 to 5 minutes;
- during the short aeration period, the aeration and mixing of the mixed liquor takes place in the oxic zone (4) and, simultaneously, the recirculation and mixing of the mixed liquor in the anaerobic zone (2) and the anoxic zone (3) is stopped, or the intensity of recirculation and mixing of the mixed liquor in the anaerobic zone (2) and the anoxic zone (3) is reduced, so as to retain a mixed liquor concentration gradient between the bottom (12) and the surface (11); in the oxic zone (4), a process of aerobic oxidation of organic substances by aerobic heterotrophic bacteria, a rapid biochemical process of nitrification of ammonia ions and nitrite ions by aerobic chemoautotrophic bacteria and an accumulation of phosphorus in phosphorus accumulating bacteria using chemically bound energy from intracellular storage substances take place in the presence of dissolved oxygen in the mixed liquor, which is fully agitated by supplied pressure air under oxic conditions; simultaneously, the settling of heavier particles from the raw wastewater and of heavier activated sludge floc particles takes place in the anaerobic zone (2) and the anoxic zone (3), wherein anaerobic conditions are created closer to the bottom (12) of the anaerobic zone (2) and the anoxic zone (3), under which a process of hydrolysis and fermentation of sedimentary and colloidal biodegradable organic substances and activated sludge by fermentative bacteria takes place, wherein easily available substrate in the form of lower fatty acids is produced in situ in the bioreactor (1);
- during the short recirculation period, aeration and mixing of the mixed liquor in the oxic zone (4) is stopped or the intensity of aeration and mixing of the mixed liquor in the oxic zone (4) is reduced so that the final concentration of dissolved oxygen in the mixed liquor does not exceed 0.5 mg/L and, simultaneously, in the anaerobic zone (2) and the anoxic zone (3), recirculation and mixing of the mixed liquor takes place; in the oxic zone (4), the concentration of dissolved oxygen is decreased by assimilation or simultaneous denitrification in the mixed liquor floc particles; in the anoxic zone (3), a rapid biochemical denitrification process takes place, wherein the oxidized forms of nitrogen having a short-term high concentration due to the nitrogen oxide (NOx) recycle are reduced using heterotrophic denitrifying bacteria in the presence of the easily available substrate in the form of lower fatty acids which have been produced in a stratified layer of the sludge blanket at the bottom (12) of the anaerobic zone (2) and of the anoxic zone (3) and which are washed out of said stratified sludge layer by internal mixed liquor suspended solids (MLSS) recycle together with fermentation bacteria, wherein the mixed liquor recirculated by internal MLSS recycle with content of fermentative bacteria inoculates the supplied unprocessed water and the mixed liquor from nitrogen oxid (NOx) recycle with fermentation bacteria, and in the anaerobic zone (2), rapid biochemical reaction of assimilation of produced lower fatty acids by the phosphorus accumulating bacteria takes place, the phosphorus accumulating bacteria producing chemically-bound energy in the form of intracellular storage materials.

2. The method of wastewater treatment according to the claim 1 **characterized in that** the number of cycles per day is 80 to 320, optimally 160 to 310, per day.

3. The method of wastewater treatment according to any of claims 1 and 2 **characterized in that** one cycle includes also at least one short idle period after the aeration period, during which neither recirculation and mixing of the mixed liquor in the anaerobic zone (2) and the anoxic zone (3) nor aeration and mixing of the mixed liquor in the oxic zone (4) takes place, wherein the short idle period lasts 0.5 to 15 minutes, optimally 2 to6 minutes.

4. The method of wastewater treatment according to any of claims 1 to 3 **characterized in that** the volumetric ratio between the anaerobic zone (2), the anoxic zone (3) and the oxic zone (4) is between 1:1:1 and 1:2:4, optimally between 1:1:1.5 and 1:1:2 and/or the hydraulic retention time in the anaerobic zone (2) is between 7 and 15 hours, optimally between 9 and 13 hours.

5. A device for wastewater treatment with the activated sludge process with increased removal of nitrogen and phosphorus by treatment method described in claims 1 to 4 comprising a bioreactor (1), which includes the anaerobic zone (2), the anoxic zone (3), the oxic zone (4) and the final settlement zone (5), where the anaerobic zone (2) and the anoxic zone (3) are separated by under baffles (6) and over baffles (7) arranged so that the flow direction of the mixed liquor is predominantly in plug-flow regime and predominantly vertical with recirculating pumps providing return sludge recycle from the final settlement zone (5) to the oxic zone (4), nitrogen oxid (NOx) recycle from the oxic zone (4) or the final settlement zone (5) to the anoxic zone (3), internal mixed liquor suspended solids (MLSS) recycle from the anoxic zone (3) to the anaerobic zone (2) **characterized in that** it comprises a control unit (22) equipped with at least one daily time schedule with fixed length of short aeration periods and short recirculation periods, and optionally also of short idle periods, within one cycle, or equipped with at least one algorithm for converting the lengths of short aeration periods, short recirculation periods, and optionally also of short idle periods, within one cycle, depending on the measured quantities by means of on-line measuring devices (42, 43), wherein the short aeration periods last 0.5 to 7 minutes and the short recirculation periods last 0.5 to 14 minutes, and wherein the control unit is connected with at least one valve (21, 35) which is controlled by the control unit and is arranged on at least one air branch (26, 29, 30, 31, 32) for the pressure air.

6. The device for wastewater treatment according to claim 5 **characterized in that** the valve (21, 35) is the three-way valve (21) or the two-way valve (35), and said valve enables redirection of the pressure air alternatively into an air branch (26) for aeration and air branches (29, 30, 31, 32) for recirculation or increase of air flow into the air branch (26) for aeration while the air flow into the recirculation air branches (29, 30, 31, 32) for recirculation is reduced, and vice versa.

7. The device for wastewater treatment with the activated sludge process with increased removal of nitrogen and phosphorus according to any of claims 5 and 6 **characterized in that** the valve (21, 35) is electrical, electromagnetic, hydraulic, or pneumatic.

## Patentansprüche

1. Verfahren zur Abwasserreinigung mit verstärkter Entfernung von Stickstoff und Phosphor durch Belebungsverfahren in einer Vorrichtung zur Abwasserreinigung, umfassend einen Bioreaktor (1), der eine anaerobe Zone (2), eine anoxische Zone (3), eine oxische Zone (4) und eine Absetzzone (5) umfasst, wobei die anaerobe Zone (2) und die anoxische Zone (3) voneinander durch die so angeordneten Tauchwände (6) und Überfallwände (7) getrennt sind, dass die Strömungsrichtung des Belebtschlammgemisches überwiegend im kolbenförmigen Regime und überwiegend vertikal ist, mit Umwälzpumpen, die den Rücklauf des rückgeführten Schlamms von der Absetzzone (5) zur anoxischen Zone (4), den Rücklauf der Stickstoffoxide (NOx) von der oxischen Zone (4) oder der Absetzzone (5) zur anoxischen Zone (3) und den internen Rücklauf des Belebtschlammgemisches (MLSS) von der anoxischen Zone (3) zur anaeroben Zone (2) sichern, das genannte Verfahren umfassend eine Steuerung der Belüftung, des Rücklaufs und der Vermischung vom Belebtschlammgemisch durch intermittierenden Betrieb in der Art, dass sich die kurzfristigen Belüftungsperioden und die kurzfristigen Umwälzerioden abwechseln und eine kurzfristige Belüftungsperiode zusammen mit einer kurzfristigen Umwälzperiode einen Zyklus bilden, wobei:
- innerhalb eines Zyklus, eine Belüftungsperiode von 0,5 bis 7 Minuten, optimal von 3 bis 5 Minuten dauert, und eine Umwälzperiode von 0,5 bis 14 Minuten, optimal von 1 bis 5 Minuten dauert;
- während der kurzfristigen Belüftungsperiode die Belüftung und die Vermischung des Belebtschlammgemisches in der oxischen Zone (4) erfolgt und gleichzeitig die Umwälzung und die Vermischung des Belebtschlammgemisches in der anaeroben Zone (2) und der anoxischen Zone (3) gestoppt wird, oder die Intensität der Umwälzung und der Vermischung des Belebtschlammgemisches in der anaeroben Zone (2) und der anoxischen Zone (3) so reduziert wird, dass der Konzentrationsgradienten des Belebtschlammgemisches zwischen dem Boden (12) und der Oberfläche (11) erhalten bleibt; in der oxischen Zone (4) in Gegenwart vom gelöstem Sauerstoff im Belebtschlammgemisch, das durch zugeführte Druckluft unter oxischen Bedingungen vollständig durchgemischt wird, ein Prozess der aeroben Oxidation organischer Substanzen durch aerobe heterotrophe Bakterien, ein schneller biochemischer Prozess der Nitrifikation von Ammoniumionen und Nitritionen durch aerobe chemoautotrophe Bakterien und eine Akkumulation von Phosphor in phosphorakkumulierenden Bakterien unter Nutzung der chemisch gebundenen Energie aus intrazellulären Speichersubstanzen stattfinden; gleichzeitig in der anaeroben Zone (2) und in der anoxischen Zone (3) das Absetzen von schwereren Partikeln aus dem Rohabwasser und von schwereren Belebtschlammflocken stattfindet, wobei die anaeroben Bedingungen näher am Boden (12) der anaeroben Zone (2) und der anoxischen Zone (3) geschaffen werden, bei denen ein Prozess der Hydrolyse und der Fermentation von absetzbaren und kolloidalen biologisch abbaubaren organischen Substanzen und vom Belebtschlamm durch fermentative Bakterien stattfindet, wobei ein leicht verfügbares Substrat in der Form von niederen Fettsäuren im Bioreaktor (1) in situ produziert wird;
- während der kurzfristigen Umwälzperiode die Belüftung und die Vermischung des Belebtschlammgemisches in der oxischen Zone (4) gestoppt oder die Intensität der Umwälzung und der Vermischung des Belebtschlammgemisches in der oxischen Zone (4) so reduziert wird, dass die Endkonzentration vom gelösten Sauerstoff in dem Belebtschlammgemisch den Wert von 0,5 mg/l nicht überschreitet und gleichzeitig in der anaeroben Zone (2) und in der anoxischen Zone (3) die Umwälzung und die Vermischung des Belebtschlammgemisches stattfindet; in der oxischen Zone (4) die Konzentration an gelöstem Sauerstoff durch Assimilation, ggf. durch simultane Denitrifikation in den Belebtschlammflocken abnimmt; in der anoxischen Zone (3) ein schneller biochemischer Denitrifikationsprozess stattfindet, wobei die oxidierten Stickstoffformen mit einer kurzfristig hohen Konzentration aufgrund des Rücklaufs der Stickstoffoxide (NOx) unter Verwendung heterotropher denitrifizierender Bakterien in Gegenwart vom leicht verfügbaren Substrat in einer Form von niederen Fettsäuren reduziert werden, die in einer geschichteten Schicht der Schlammwolke am Boden (12) der anaeroben Zone (2) und der anoxischen Zone (3) produziert wurden, und aus dieser geschichteten Schlammschicht durch internen Rücklauf des Belebtschlammgemisches (MLSS) zusammen mit Fermentationsbakterien ausgewaschen werden, wobei das durch den internen Rücklauf des Belebtschlammgemisches (MLSS) umgewälzte Belebtschlammgemisch mit Gehalt an fermentativen Bakterien das zugeführte Rohabwasser und das Belebtschlammgemisch von dem Rücklauf der Stickstoffoxide (NOx) mit Fermentationsbakterien inokuliert und in der anaeroben Zone (2) eine schnelle biochemische Reaktion der Assimilation der produzierten niederen Fettsäuren durch die phosphorakkumulierenden Bakterien stattfindet, die die chemisch gebundene Energie in der Form von intrazellulären Speichersubstanzen bilden.

2. Verfahren zur Abwasserreinigung nach Anspruch 1, **dadurch gekennzeichnet, dass** die Anzahl der Zyklen pro Tag von 80 bis 320, optimal von 160 bis 310 Zyklen pro Tag beträgt.

3. Verfahren zur Abwasserreinigung nach einem der Ansprüche 1 und 2, **dadurch gekennzeichnet, dass** ein Zyklus auch mindestens eine kurzfristige Ruhezeit nach der Belüftungsperiode umfasst, während der weder die Umwälzung und die Vermischung des Belebtschlammgemisches in der anaeroben Zone (2) und in der anoxischen Zone (3) noch die Belüftung und die Vermischung des Belebtschlammgemisches in der oxischen Zone (4) stattfindet, wobei die kurzfristige Ruhezeit von 0,5 bis 15 Minuten, optimal von 2 bis 6 Minuten dauert.

4. Verfahren zur Abwasserreinigung nach einem der Ansprüche 1 bis 3, **dadurch gekennzeichnet, dass** das volumetrisches verhältnis zwischen der anaeroben Zone (2), der anoxischen Zone (3) und der oxischen Zone (4) zwischen 1:1:1 und 1:2:4, optimal zwischen 1:1:1,5 und 1:1:2 liegt, und/oder die hydraulische Verweilzeit in der anaeroben Zone (2) zwischen 7 und 15 Stunden, optimal zwischen 9 und 13 Stunden beträgt.

5. Vorrichtung zur Abwasserreinigung mit Belebungsverfahren mit verstärkter Entfernung von Stickstoff und Phosphor durch einen in den Ansprüchen 1 bis 4 beschriebenen Reinigungsverfahren, umfassend einen Bioreaktor (1), der eine anaerobe Zone (2), eine anoxische Zone (3), eine oxische Zone (4) und eine Absetzzone (5) umfasst, wobei die anaerobe Zone (2) und die anoxische Zone (3) voneinander durch die so angeordneten Tauchwände (6) und Überfallwände (7) getrennt sind, dass die Strömungsrichtung des Belebtschlammgemisches überwiegend kolbenförmig und überwiegend vertikal ist, mit den Umwälzpumpen, die den Rücklauf des rückgeführten Schlamms von der Absetzzone (5) zur anoxischen Zone (4), den Rücklauf der Stickstoffoxide (NOx) von der oxischen Zone (4) oder der Absetzzone (5) zur anoxischen Zone (3), den internen Rücklauf des Belebtschlammgemisches (MLSS) von der anoxischen Zone (3) zur anaeroben Zone (2) sichern, **dadurch gekennzeichnet, dass** sie eine Steuereinheit (22) umfasst, ausgestattet mit mindestens einem Tageszeitplan mit fester Länge der kurzfristigen Belüftungsperioden und der kurzfristigen Umwälzperioden, bzw. der kurzfristigen Ruheperioden innerhalb eines Zyklus, oder ausgerüstet mit mindestens einem Algorithmus zur Umrechnung der Längen kurzfristigen Belüftungsperioden, der kurzfristigen Umwälzperioden, bzw. der kurzfristigen Ruheperioden in Abhängigkeit von den mittels Online-Messgeräten (42, 43) in Rahmen eines Zyklus ermittelten Messgrößen, wobei die kurzfristige Belüftungsperiode von 0,5 bis 7 Minuten und die kurzfristige Umwälzperiode von 0,5 bis 14 Minuten betragen, und wobei die Steuereinheit mit mindestens einem von der Steuereinheit gesteuerten und in mindestens einem Luftzweig (26, 29, 30, 31, 32) der Druckluft angeordneten Ventil (21, 35), verbunden ist.

6. Vorrichtung zur Abwasserreinigung nach Anspruch 5, **dadurch gekennzeichnet, dass** das Ventil (21, 35) ein Dreiwegeventil (21) oder ein Zweiwegeventil (35) ist, und dieses Ventil die Umlenkung der Druckluft alternativ in den Luftzweig (26) der Belüftung und in den Luftzweig (29, 30, 31, 32) der Umwälzung oder die Erhöhung des Luftstroms in den Luftzweig (26) der Belüftung bei gleichzeitiger Reduktion des Luftstroms in den Luftzweig (29, 30, 31, 32) der Umwälzung und umgekehrt ermöglicht.

7. Vorrichtung zur Abwasserreinigung mit Belebungsverfahren mit verstärkter Entfernung von Stickstoff und Phosphor nach einem der Ansprüche 5 und 6, **dadurch gekennzeichnet, dass** das Ventil (21, 35) elektrisch, elektromagnetisch, hydraulisch oder pneumatisch ist.

## Revendications

1. Procédé de traitement des eaux usées avec une élimination accrue du phosphore et de l'azote au moyen du procédé des boues activées dans un dispositif de traitement des eaux usées comprenant un bioréacteur (1) doté d'une zone anaérobique (2), une zone anoxique (3), une zone oxique (4) et une zone de décantation (5), où la zone anaérobique (2) et la zone anoxique (3) sont séparées par des déflecteurs submersibles (6) et par des déflecteurs déversants (7) disposés de manière que l'écoulement du mélange activé se fait essentiellement dans la direction du mouvement de piston et de manière verticale, alors que les pompes de recirculation assurent le reflux de la boue de retour depuis la zone de décantation (5) dans la zone oxique (4), le reflux de l'oxyde d'azote (NOx) depuis la zone oxique (4) ou depuis la zone de décantation (5) dans la zone anoxique (3), et un reflux interne du mélange activé (MLSS) depuis la zone anoxique (3) dans la zone anaérobique (2), ledit système assurant le contrôle de l'aération, de recirculation et du mixage du mélange activé sur la base d'un fonctionnement intermittent, où des courtes périodes d'aération et des courtes périodes de recirculation alternent et une courte période d'aération et une période de recirculation forment un cycle, alors que :
- pendant un cycle, la période d'aération dure de 0,5 à 7 minutes, de manière optimale 3 à 5 minutes, et la période de recirculation dure de 0,5 à 14 minutes, de manière optimale 1 à 5 minutes;
- au cours de la courte période d'aération, l'aération et le mixage du mélange activé s'effectuent à l'intérieur de la zone oxique (4) et, parallèlement, la recirculation et le mixage du mélange activé dans la zone anaérobique (2) et dans la zone anoxique (3) sont interrompus ou il y a une baisse d'intensité de la recirculation et du mixage du mélange activé dans la zone anaérobique (2) et dans la zone anoxique (3), afin de maintenir le gradient de concentration du mélange activé entre le fond (12) et la surface (11); en présence de l'oxygène dissous dans le mélange activé, un processus de l'oxydation aérobique des substances organiques au moyen des bactéries aérobiques hétérotrophiques, ainsi qu'un processus biochimique rapide de nitrification des ions d'ammonium et de nitrite au moyen des bactéries aérobiques chimioautotrophes, et l'accumulation de phosphore dans les bactéries accumulant le phosphore à l'aide de l'énergie liée chimiquement à partir des substances intercellulaires de stockage, ladite énergie étant mélangée grâce à l'air sous pression fourni en conditions oxiques, se déroulent à l'intérieur de la zone oxique (4); en même temps, les particules plus lourdes situées dans les eaux usées brutes ainsi que les flocs de boue plus lourds sont sédimentés dans la zone anaérobique (2) et dans la zone anoxique (3), alors que près du fond (12) de la zone anaérobique (2) et de la zone anoxique (3) sont formées des conditions anaérobiques, sous lesquelles se déroule un processus de l'hydrolyse et de la fermentation des substances organiques biodégradables sédimentaires et colloïdales et de la boue activée à l'aide des bactéries fermentatives, produisant un substrat facilement disponible en forme des acides gras inférieurs in situ à l'intérieur de bioréacteur (1);
- au cours de la courte période de recirculation, l'aération et le mixage du mélange activé dans la zone oxique (4) sont interrompus ou il y a une baisse d'intensité de l'aération et du mixage du mélange activé dans la zone oxique (4) afin d'éviter que la concentration finale de l'oxygène dissous ne dépasse 0,5 mg/l et, parallèlement, la recirculation et le mixage du mélange activé ont lieu dans la zone anaérobique (2) et dans la zone anoxique (3); la concentration de l'oxygène dissous dans la zone oxique (4) est réduite par l'assimilation ou par une dénitrification simultanée dans les flocs du mélange activé; un processus biochimique rapide de dénitrification se déroule dans la zone anoxique (3), tandis que les formes oxydées de l'azote ayant, temporairement, une forte concentration à cause du reflux de l'oxyde d'azote (NOx) sont réduites au moyen des bactéries hétérotrophes dénitrifiantes en présence d'un substrat facilement disponible en forme des acides gras inférieurs, qui sont produits dans la couche stratifiée du lit de boue situé au fond (12) de la zone anaérobique (2) et de la zone anoxique (3) et qui sont enlevés de ladite couche stratifiée à l'aide du reflux de mélange activé (MLSS) et des bactéries fermentatives, le mélange activé étant recirculé par un reflux interne de mélange activé (MLSS) contenant des bactéries fermentatives inocule les eaux usées brutes entrantes et le mélange activé du reflux de l'oxyde d'azote (NOx) avec des bactéries fermentatives, et, dans la zone anaérobique (2), une réaction biochimique rapide d'assimilation des acides gras inférieurs produits avec des bactéries accumulant le phosphore a lieu, créant de l'énergie liée chimiquement en forme des substances intercellulaires de stockage.

2. Le procédé de traitement des eaux usées selon la revendication 1, **caractérisé en ce que** le nombre de cycles effectués par jour qui peut aller de 80 à 320, de manière optimale de 160 à 310 par jour.

3. Le procédé de traitement des eaux usées selon la revendication 1 ou 2, **caractérisé en ce que** le fait que chaque cycle comprend également au moins une période de repos suivant la période d'aération, pendant laquelle ni recirculation ni mixage du mélange activé ne se produisent dans la zone anaérobique (2) et dans la zone anoxique (3), et, ni aération ni mixage du mélange activé ne se produisent dans la zone oxique (4), ladite période de repos durant entre 0,5 et 15 minutes, de manière optimale 2 à 6 minutes.

4. Le procédé de traitement des eaux usées selon l'une quelconque des revendications 1 à 3, **caractérisé en ce que** le fait que le rapport volumétrique entre la zone anaérobique (2), la zone anoxique (3) et la zone oxique (4) si situe entre 1:1:1 et 1:2:4, de manière optimale entre 1:1:1,5 et 1:1:2 et/ou le temps de rétention hydraulique dans la zone anaérobique (2) va de 7 et 15 heures, de manière idéale entre 9 et 13 heures.

5. Le procédé de traitement des eaux usées avec une élimination accrue du phosphore et de l'azote au moyen du procédé des boues activées défini dans les revendications 1 à 4, comportant un bioréacteur (1) qui est doté une zone anaérobique (2), une zone anoxique (3), une zone oxique (4) et une zone de décantation (5), où la zone anaérobique (2) et la zone anoxique (3) sont séparées par les déflecteurs submersibles (6) et par des déflecteurs déversants (7) disposés de manière que l'écoulement du mélange activé se fait essentiellement dans la direction du mouvement de piston et de manière verticale, alors que les pompes de recirculation assurent le reflux de la boue de retour depuis la zone de décantation (5) dans la zone oxique (4), le reflux de l'oxyde d'azote (NOx) depuis la zone oxique (4) ou de la zone de décantation (5) dans la zone anoxique (3), et un reflux interne du mélange activé (MLSS) depuis la zone anoxique (3) dans la zone anaérobique (2), lequel dispositif est **caractérisé en ce que** une unité de commande (22) équipée d'au moins un mode temporel journalier aux durées déterminées des courtes périodes d'aération et des courtes périodes de recirculation ou des courtes périodes de repos au sein d'un cycle, ou équipée d'au moins un algorithme servant à convertir les durées des courtes périodes d'aération, des courtes périodes de recirculation, et, éventuellement, des courtes périodes de repos en fonction des variables mesurées par les appareils de mesure en ligne (42, 43) pour un cycle, alors que la courte période d'aération dure entre 0,5 et 7 minutes et la courte période de recirculation dure entre 0,5 et 14 minutes, et l'unité de commande est reliée à l'aide d'au moins une soupape (21, 35) contrôlée par l'unité de commande et située sur au moins une branche d'air (26, 29, 30, 31, 32) de l'air sous pression.

6. Le procédé de traitement des eaux usées selon la revendication 5, **caractérisé en ce que** le fait qu'il comporte une soupape (21, 35), qui est une soupape à trois voies (21) ou une soupape à deux voies (35), ladite soupape permettant de transférer l'air sous pression alternativement dans la branche d'air (26) de l'aération et dans les branches d'air (29, 30, 31, 32) de recirculation ou permettant d'augmenter le flux d'air dans la branche d'air (26) de l'aération et, en même temps, de réduire le flux d'air dans la branche d'air (29, 30, 31, 32) de recirculation et vice versa.

7. Le procédé de traitement des eaux usées avec une élimination accrue du phosphore et de l'azote au moyen du procédé des boues activées défini selon l'une des quelconques revendications 5 et 6, **caractérisé en ce que** le fait qu'il comporte une soupape (21, 35) électrique, électromagnétique, hydraulique ou pneumatique.
